# EUROPEAN PATENT SPECIFICATION

(11) **EP 0 677 961 B1**
(45) Date of publication and mention of the grant of the patent: **17.05.2000**
(21) Application number: 95300670.7
(22) Date of filing: 02.02.1995
(51) Int. Cl.: H04N 5/926, H04N 7/52, G11B 20/12, G11B 27/30

(54) **Recording medium for recording and reproducing data**
Aufnahmemedium zur Aufzeichnung und Wiedergabe von Daten
Support d'enregistrement pour l' enregistrement et de reproduction de données

(30) Priority: 13.04.1994 JP 7486394; 28.09.1994 JP 23378994
(43) Date of publication of application: 18.10.1995
(60) Divisional application: 97112836.8
(73) Proprietor: KABUSHIKI KAISHA TOSHIBA, Kawasaki-shi, Kanagawa-ken 210-8572 (JP); TOSHIBA AVE CO., LTD, Minato-ku, Tokyo 105 (JP)
(72) Inventor: Kikuchi, Shinichi, c/o Intellectual Property Div., Tokyo (JP); Kitamura, Tetsuya, c/o Intellectual Property Div., Tokyo (JP); Mimura, Hideki, c/o Intellectual Property Div., Tokyo (JP); Taira, Kazuhiko, c/o Intellectual Property Div., Tokyo (JP)
(74) Representative: Maury, Richard Philip

(56) References cited:
- EP-A- 0 325 325
- EP-A- 0 331 417
- EP-A- 0 424 903
- EP-A- 0 521 487
- EP-A- 0 529 834
- WO-A-94/07332
- WO-A-94/30014
- US-A- 5 068 744
- US-A- 5 280 572
- US-A- 5 291 486
- MPEG1 STANDARD, SECTION 1: SYSTEMS: "Coding of Moving Pictures and Associated Audio for Digital Storage Media at up to about 1.5Mbits/s" March 1992 , ISO/IEC JTC1/SC29/WG11, CD11172-1, REVISION 2, DOCUMENT N156, XP002019450 * page 1 - page 57 *
- SID INTERNATIONAL SYMPOSIUM DIGEST OF PAPERS, BOSTON, MAY 17 - 22, 1992, no. VOL. 23, 17 May 1992, SOCIETY FOR INFORMATION DISPLAY, pages 127-129, XP000479005 MACINNIS A G: "THE MPEG SYSTEMS SPECIFICATION: MULTIPLEX, CODING, AND CONSTRAINTS"
- SIGNAL PROCESSING. IMAGE COMMUNICATION, vol. 4, no. 2, 1 April 1992, pages 153-159, XP000273161 MACINNIS A G: "THE MPEG SYSTEMS CODING SPECIFICATION"

## Description

The present invention relates to a method for constructing data blocks of for example picture data and sound data as one data unit, an apparatus for reproducing the data block, and a method for reproducing the data block.

In recent years, a moving picture type optical disc reproducing apparatus for reproducing such as picture data and sound data from an optical disc has been developed. Such an apparatus has been widely used as for example movie reproducing apparatus and Karaoke reproducing apparatus. Recently, as a data compressing system for moving picture data, an MPEG (Moving Picture Image Coding Expert Group) system has been employed as an international standard. In the MPEG system, picture data is compressed with a variable length.

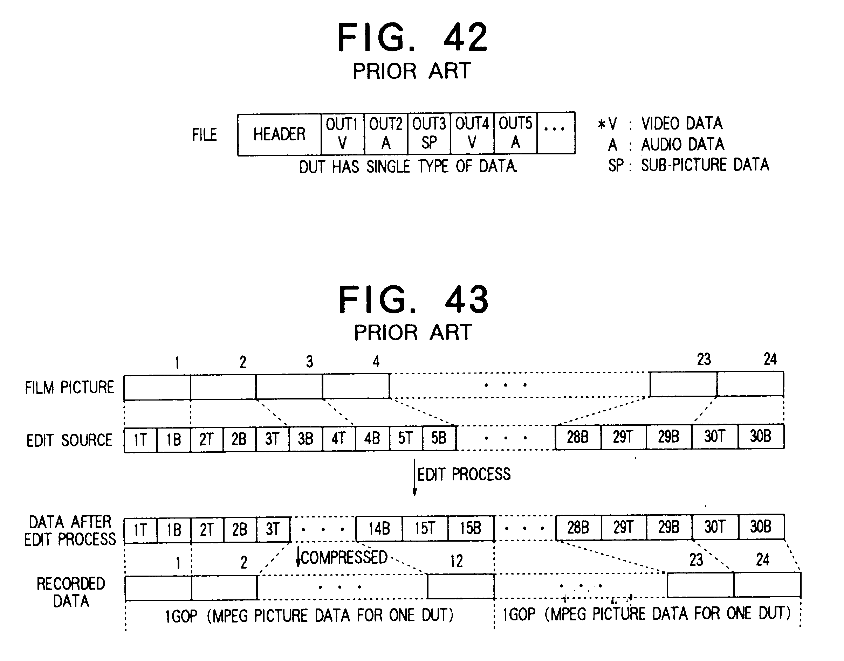

When a moving picture (main picture), sound, superimposed text (sub-picture), and so forth are recorded on a recording medium such as an optical disc, as shown in Fig. 42, each type of data is divided into minimum data units (hereinafter referred to as DUTs). At the beginning of a set of DUTs, a header that represents each DUT is provided. The length of each DUT is fixed. The length of each DUT of for example a CD-ROM is 2340 bytes.

However, when the length of the DUT is fixed, dummy data should be placed in DUTs so that the data amount of the main picture accords with the data amount of the sub-picture. Thus, the redundancy of the data inevitably increases. To prevent such a problem, a system for causing the reproducing time period of data of the DUT to be constant has been proposed.

However, when such a system is used, the following problems take place.

In this system, since each DUT has a different length, the header should have control information that represents at least the start position of each DUT and the relation between DUTs so that the reproducing apparatus can process the DUTs. Such information can be easily provided. In recent years, however, a system of which a plurality of channels of sound data and sub-picture data are recorded on an optical disc has been studied and thereby data of the DUTs has been finely constructed. Thus, information of the start position, relation, and so forth of each channel data in each DUT is also required. Thus, the conventional data group system cannot deal with such requirements.

When video data is compressed corresponding to the MPEG system, it is very difficult to divide video data by a predetermined time period. Next, this matter will be described.

Normally, compressed video data is generated in the following manner. As shown in Fig. 43, a picture film of 24 pictures per sec is converted into editing source data of 30 frames. Thereafter, the source data is edited and compressed. Thus, two groups (GOP) of video data composed of 12 pictures are generated per second. One group of video data is one DUT video data. As an important matter, data generated from one frame of a film is compressed as a set because the variation thereof is small.

Thus, compressed video data including 15 frames of NTSC pictures is obtained per DUT (one GOP = 12 pictures).

However, depending on the editing method, compressed video data including 15 frames per GOP (12 pictures) may not be generated.

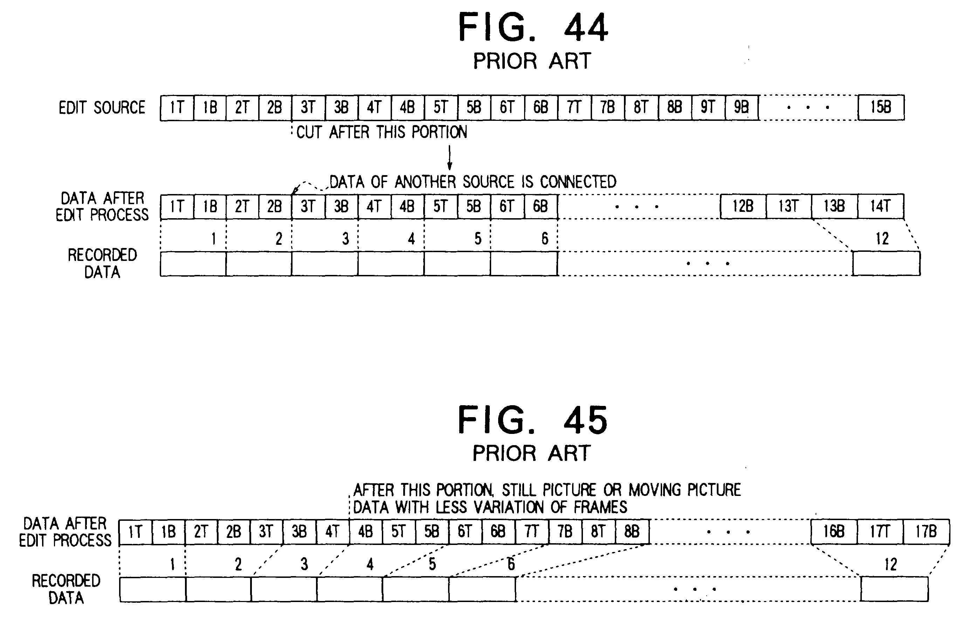

For example, as shown in Fig. 44, if 3T or later of a second editing source data of a picture film is cut and another editing source data generated from another picture film is connected thereto, after 2T and 2B are compressed and a second picture is generated, a third picture is composed of 3T and 3B. Thus, 12 pictures only contain 13 frames and one field as NTSC pictures.

In addition, as shown in Fig. 45, if video data is still picture or the like, after three frames (for example, 4B, 5T, and 5B) are edited, data is compressed and thereby 12 pictures are generated. Thus, in this case, the 12 pictures contain 17 frames of NTSC pictures.

Consequently, the number of frames contained in one GOP (12 pictures) varies in the range from 12 frames (minimum) to 18 frames (maximum). Thus, since the reproducing time period varies, data should be re-compressed so that the reproducing time period becomes constant. This operation should be performed for all data and thereby much labor is required.

To reduce such labor, a system that does not require that the reproducing time period of one DUT should be fixed has been proposed. However, in this system, there is a problem on the synchronization of main picture, sound, and sub-picture that are being reproduced.

In other words, to synchronize the reproduction of main picture, sound, and sub-picture under the condition of which the reproducing time period of each DUT is variable, the reproducing process of the sound and sub-picture should be properly controlled corresponding to the number of frames (reproducing time period) in the DUT to be reproduced. However, the number of frames is unknown until the compressed picture data is de-compressed. Thus, it is substantially difficult to synchronize the reproduction of the main picture, sound, and sub-picture.

WO 94/07332 describes a digital video signal processing apparatus in which video data and audio data are recorded in units of a plurality of packets onto a disk. Means are provided for generating a marker which indicates the signal type.

MPEG1 Standard, Section 1: Systems: "Coding of Moving Pictures and Associated Audio and Digital Storage Media at up to about 1.5 Mbits/s" March 1992, ISO/IEC JTC1/SC29/WG11, CD11172-1, Revision 2, Document N156, XP002019450, page 1 - page 57 describes a method of combining one or more data streams from the video and audio parts with timing information to form a single stream. The stream is constructed in two layers: a system layer and a compression layer.

US-5,068,744 describes a picture data compressing and recording apparatus which divides picture data into blocks and applies two-dimensional orthogonal transformation to the blocks of picture data.

WO94/30014 describes a method of generating a bit stream by multiplexing non-compressed auxiliary information with an information stream.

The present invention is made from the above-described point of view. An object of the present invention is to provide a recording medium wherein a plurality of data blocks such as main picture, sound, sub-picture, and so forth are treated as one data unit and wherein in particular, even if sound data and sub-picture data are set for a plurality of channels or a plurality of streams, they can be precisely and stably divided corresponding to a block header in the data blocks.

Another object of the present invention is to provide a recording medium wherein a plurality of data blocks such as main picture, sound, and sub-picture are treated as one data unit that is synchronously reproduced and wherein in particular, even if the number of display frames of the data unit of the main picture is variable, each data block can be precisely and stably synchronized at intervals of the frame display of the main picture.

To accomplish the above described objects, the present invention is defined by the appended claims.

According to the present invention, since a block header is provided at the beginning of a data block so as to control data in the data block, the data in the data block can be easily controlled in smaller units such as channels and streams corresponding to the block header.

According to the present invention, since a block header including control information that represents divided positions of data of groups in a data block is provided at the beginning of the data block, data of each group in the data block can be divided corresponding to the control information.

According to the present invention, since a block header that represents valid block length and start position of data of independent units (stream units and channel units) is provided in a main picture data block, a sound data block, and a sub-picture data block, data of each block can be easily and precisely controlled corresponding to the block header.

According to the present invention, since the boundary of a sound data block and a sub-picture data block is variable in the range of the maximum block length of a combination of a sound data block and a sub-picture data block that are adjacently disposed, if necessary, the sound data block can be extended for improving the sound data. Alternatively, the block length of the sub-picture data can be extended so as to increase information amount of superimposed text.

According to the present invention, since a unit header in a data unit has information that identifies a data block number included therein, when a plurality of data blocks in the data unit are processed chronologically independent from other data blocks and disposed at predetermined intervals, the data blocks can be processed in a plurality of data units so that they can be processed as one data block.

According to the present invention, start point, size, and presence/absence of each sound stream data in a data unit can be identified corresponding to stream position information of a sound block header. In addition, the construction of each sound stream data can be identified corresponding to the stream construction information.

According to the present invention, since information that represents that the pattern of each frame data is the same is provided as stream construction information, it is not necessary to continuously record and reproduce the same frame data.

According to the present invention, the start point, size, and presence/absence of each sub-picture channel data in a data unit can be identified corresponding to channel position information of a sub-picture block. In addition, the content of the display control of the sub-picture channel data can be identified as categories such as immediate display mode, data hold mode, hold data display mode, display clear mode, and so forth as in claim 10 corresponding to the channel display control information.

According to the present invention, for a program that is composed of a set of data units, a program that includes a particular data unit, reproducing start time of the particular data unit in the program, a physical start address of the particular data unit, and a physical start address of another data unit spaced apart from the particular data unit by ± n can be identified.

According to the present invention, a physical start address of a data unit spaced apart from a particular data unit by ± n is represented by a relative sector number measured from the particular data unit. When a data unit spaced apart from a particular data unit by ± n is not present in the boundary of data, the physical start address is represented by a relative sector to the boundary. Thus, even if a data unit spaced apart form a particular data unit for ± n is not present in the boundary, a branch process and a termination process can be performed.

According to the present invention, a program number of a program that can be successively reproduced after a program including a data unit can be identified.

According to the present invention, an external effect process can be performed for each data unit corresponding to an effect setting flag.

According to the present invention, when the number of frames reproduced from main picture data for each data unit (namely, reproducing time period is variable for each data unit), the reproduction of main picture, sound, and sub-picture can be synchronized.

According to the present invention, when a sub-picture data block is disposed in N data units (where N is an integer that is equal to or larger than 2), the reproduction of main picture, sound, and sub-picture can be synchronized.

These and other objects, features and advantages of the present invention will become more apparent in light of the following detailed description of a best mode embodiment thereof, as illustrated in the accompanying drawings.
Fig. 1 is a block diagram showing the construction of a moving picture type optical disc reproducing apparatus according to an embodiment of the present invention;
Fig. 2 is a schematic diagram showing a data format of an optical disc reproduced by the optical disc reproducing apparatus of Fig. 1;
Fig. 3 is a schematic diagram showing the construction of a DUT;
Fig. 4 is a table showing the construction of a DUT header;
Fig. 5 is a table showing DUT construction identification information;
Fig. 6 is a block diagram showing the construction of a system processor (SYS-PRO) portion;
Fig. 7 is a schematic diagram showing a data dividing process block in an ARBX portion;
Fig. 8 is a timing chart showing the generation of a select signal for dividing DUT data into blocks;
Fig. 9 is a schematic diagram for explaining an variation of boundary of a sub-picture data block and an audio data block in the DUT;
Fig. 10 is a schematic diagram showing a non-interleave mode of sub-picture data;
Fig. 11 is a schematic diagram showing an interleave mode of sub-picture data;
Fig. 12 is a timing chart showing reproduction of sub-picture data in the non-interleave mode and the interleave mode;
Fig. 13 is a schematic diagram showing the construction of an audio data block;
Fig. 14 is a table showing the construction of an audio block header;
Fig. 15 is a schematic diagram showing invalid data in the audio data block;
Fig. 16 is a schematic diagram showing the construction of an audio stream;
Fig. 17 is a schematic diagram for explaining a reproducing process in a reduction mode of audio data;
Fig. 18 is a schematic diagram showing a sub-picture data block;
Fig. 19 is a table showing the construction of a sub-picture block header;
Fig. 20 is a table showing the construction of a sub-picture data header according to an embodiment of the present invention;
Fig. 21 is a schematic diagram for explaining a display control method of sub-picture data;
Fig. 22 is a table showing the construction of DUT identification and search information in a DUT header;
Fig. 23 is a schematic diagram for explaining sector number information for high speed searching in the DUT header;
Fig. 24 is a flow chart showing steps of high speed searching corresponding to sector number information of Fig. 23;
Fig. 25 is a schematic diagram for explaining the operation in the case that no desired jump destination is present in high speed searching;
Fig. 26 is a table showing DUT reproduction control information in the DUT header;
Fig. 27 is a block diagram showing the construction of a non-continuous program detecting process block in an ARBX portion;
Fig. 28 is a schematic diagram for explaining a broken link process;
Fig. 29 is a block diagram showing the construction of an effect detecting block in the ARBX portion;
Fig. 30 is a schematic diagram for explaining the effect process;
Fig. 31 is a schematic diagram for explaining the construction of a video data block;
Fig. 32 is a table showing the construction of a video block header;
Fig. 33 is a table showing the construction of a video block;
Fig. 34 is a schematic diagram for explaining the total number of frames and an I picture display start frame number in the interleave mode;
Fig. 35 is a block diagram showing the construction of a frame number generating process block;
Fig. 36 is a block diagram showing the construction of a sub-picture reproducing portion in the process block of Fig. 35;
Fig. 37 is a flow chart showing a process sequence of the process block of Fig. 35;
Fig. 38 is a block diagram showing the construction of a sub-picture process portion of a frame number generating process block according to another embodiment of the present invention;
Fig. 39 is a flow chart showing a process sequence of the process block of Fig. 38;
Fig. 40 is a block diagram showing the construction of a process block in a picture reproducing portion in the case that K < J in a comparator of the process block of Fig. 35;
Fig. 41 is a flow chart showing a process sequence of the process block of Fig. 40;
Fig. 42 is a schematic diagram showing the data construction of a file of a conventional optical disc;
Fig. 43 is a schematic diagram for explaining an editing method of compressed video data;
Fig. 44 is a schematic diagram for explaining a data connecting method in editing compressed vide data; and
Fig. 45 is a schematic diagram for explaining a method for compressing data of three frames so as to generate 12 pictures of data.

Next, with reference to the accompanying drawings, embodiments of the present invention will be described in detail.

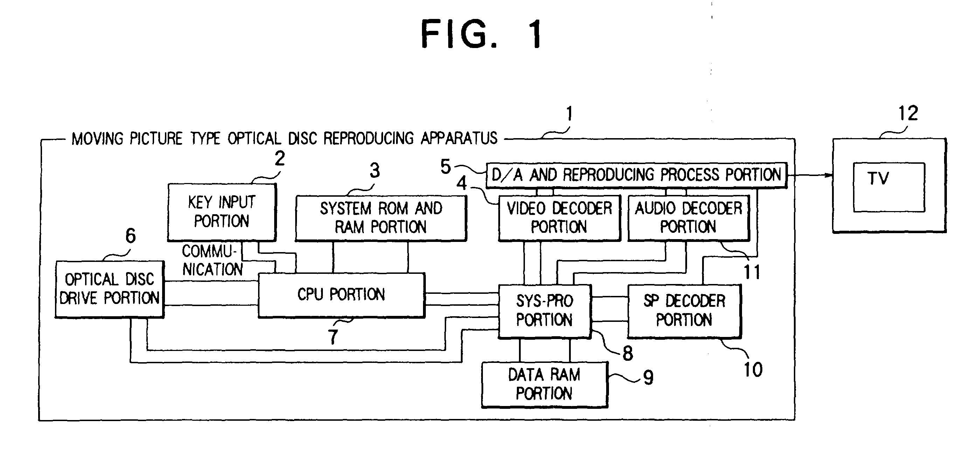

Fig. 1 is a block diagram showing the construction of a moving picture type optical disc reproducing apparatus according to the present invention.

As shown in Fig. 1, the optical disc reproducing apparatus comprises a key input portion 2, a system ROM and RAM portion 3, a video decoder 4, a D/A and reproducing process portion 5, an optical disc drive portion 6, a CPU portion 7, a system processor portion (hereinafter referred to as SYS-PRO portion) 8, a data RAM portion 9, an SP (sub-picture) decoder portion 10, an audio decoder portion 11, and a TV portion 12. The key input portion 2 allows the user to input various commands such as reproduction, stop, fast forward, fast rewind, superimpose display, and so forth for the optical disc reproducing apparatus. The ROM of the system ROM and RAM portion 3 stores a control program (software) for controlling the operations of the apparatus. When the power of the apparatus is turned on, the control program is read to the CPU portion 7. The RAM of the system ROM and RAM portion 3 has a working region in which data is processed.

In the optical disc reproducing apparatus 1, the CPU portion 7 sends a desired address and a read command to the optical disc drive portion 6 corresponding to the key operation of the key input portion 2. The optical disc drive portion 6 reads data from the optical disc corresponding to the received command and sends the data to the SYS-PRO portion 8. The SYS-PRO portion 8 temporarily stores the data (digital data) in the data RAM portion 9 and divides the data into MPEG compressed moving picture data (hereinafter referred to as video data), sound data, sub-picture data, and so forth. In addition, the SYS-PRO portion 8 sends the video data to the video decoder portion 4, the sound data to the audio decoder portion 11, and the sub-picture data (for reproducing superimposed text and simple animation data) to the SP decoder portion 10. Each of the decoder portions 4, 10, and 11 decodes the input data and outputs the decoded data to the D/A and reproducing process portion 5. The D/A and reproducing process portion 5 converts the decoded digital signal into an analog signal and outputs the analog signal to the TV portion 12.

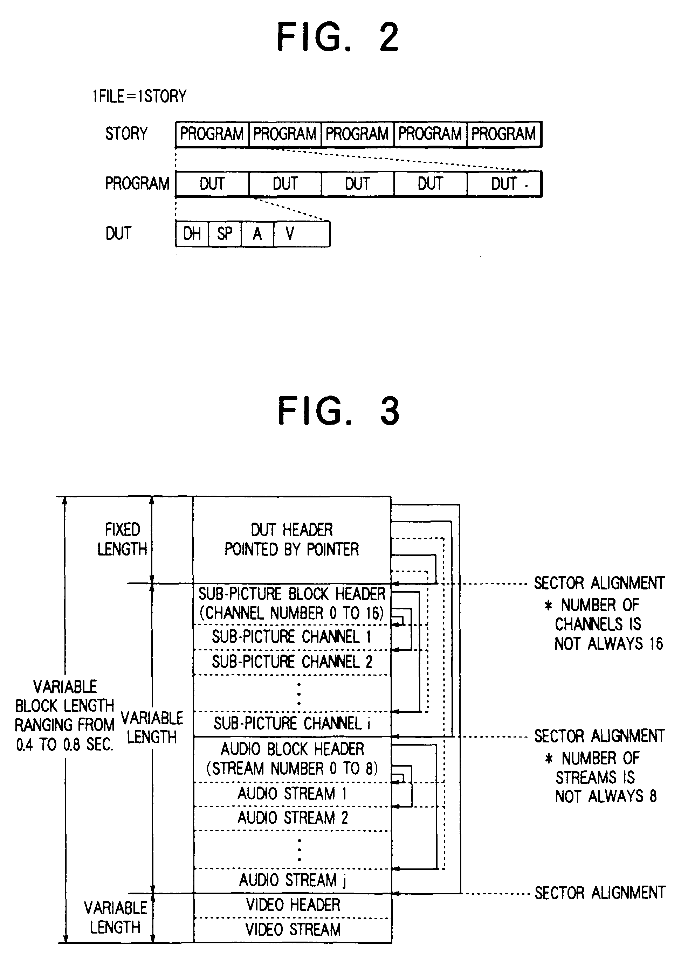

Fig. 2 is a schematic diagram showing the data format of the optical disc. Referring to Fig. 2, files stored on the optical disc are hierarchically constructed. Each file accords with one story. One story is constructed of a plurality of programs. One program is constructed of a plurality of data units (hereinafter referred to as DUT). Since one program is constructed of a plurality of DUTs, the reproducing order of each program can be changed and each process can be branched. In addition, an effect process can be performed for each DUT. One DUT is composed of a DUT header HD, a sub-picture block data SP, an audio block data A, and a video block data V. The sub-picture block data, the audio block data, and the video block data are reproduced on the same time axis.

Fig. 3 is a schematic diagram showing the construction of the DUT of Fig. 2.

As shown in Fig. 3, the reproducing time period of one DUT can be varied in the range from 0.4 sec. to 0.8 sec. As shown in Fig. 2, the length of the DUT header HD is fixed. On the other hand, the length of each of the sub-picture data block SP, the audio data block A, and the video data block V is variable depending on the DUT reproducing time period, presence/absence of data compression, and the compressing system.

The DUT header contains various control information for each data block in the DUT. The sub-picture data block is composed of a plurality of sub-picture channels 1, 2, ..., and i and a sub-picture block header that contains control information for each channel data. The audio data block is composed of a plurality of audio streams 1, 2, ..., and j and an audio block header that contains control information for audio data of each stream. The video data block is composed of a video stream that is for example MPEG compressed moving picture data and a video block header that contains control information for the video stream.

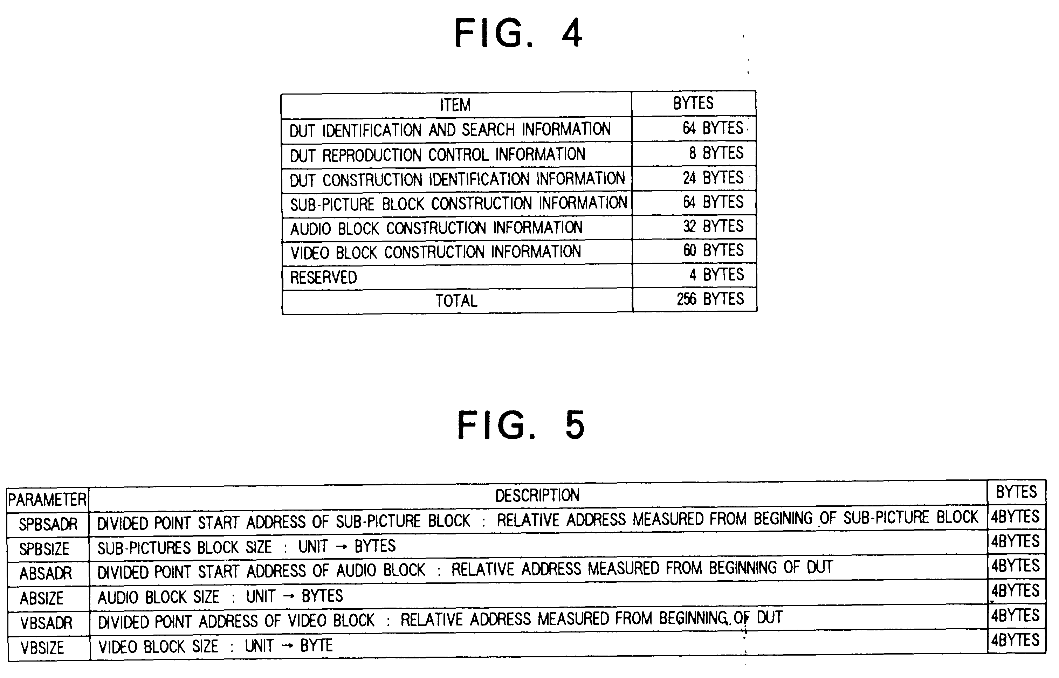

Fig. 4 is a table showing the construction of the DUT header.

Referring to Fig. 4, the DUT header is composed of DUT identification and search information, DUT reproducing control information, DUT construction identification information, sub-picture block construction information, audio block construction information, video block construction information, reserved information, and so forth. When a file is generated, it is assumed that a read error of the DUT header takes place. To prevent the read error, each information is recorded on the disc four times.

Each of the sub-picture block construction information, audio block construction information, and video block construction information contains sector alignment information that represents sector numbers with which each data block starts and ends.

As shown in Fig. 5, the DUT construction identification information contains the divided point start address of each sub-picture data block (SPBSADR), its size (SPBSIZE), the divided point start address of each audio data block (ABSADR), its size (ABSIZE), the divided point start address of each video data block (VBSADR), its size (VBSIZE), and so forth. The divided point start address of each data block is represented by a relative address measured from the beginning of the DUT. The size of each address is represented by bytes.

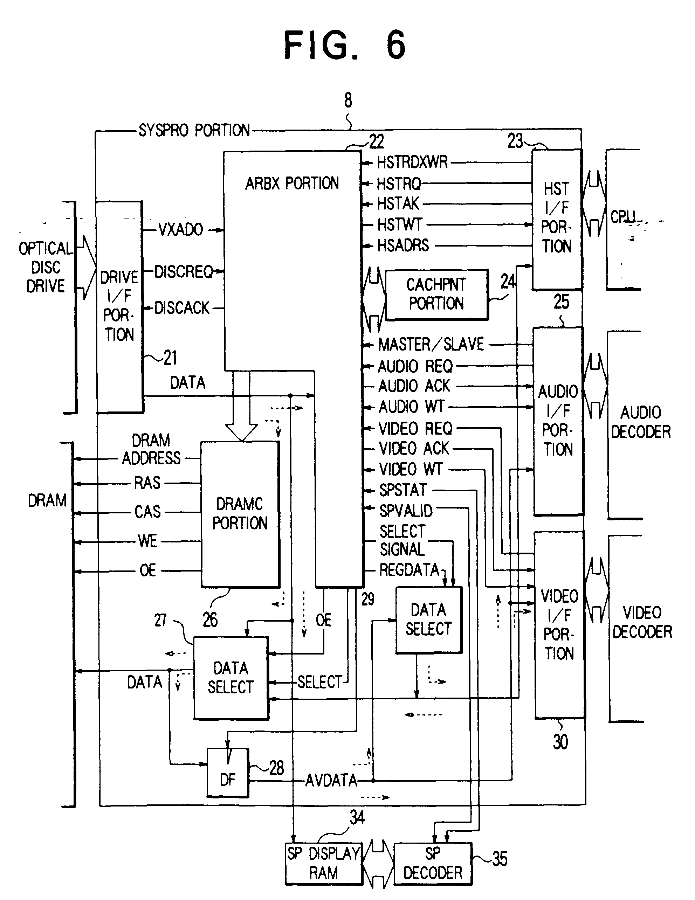

Next, the construction of the SYS-PRO portion 8 of the optical disc reproducing apparatus of Fig. 1 will be described. Fig. 6 is a block diagram showing the construction of the SYS-PRO portion 8.

As shown in Fig. 6, the SYS-PRO portion 8 comprises a drive I/F portion 21, an ABRX portion 22, a HST I/F portion 23, a CACHPNT portion 24, an audio I/F portion 25, a DRAM control portion (DRAMC portion) 26, data select portions 27 and 29, a D-type flip-flop (DF) 28, and a video I/F portion 30.

The SYS-PRO portion 8 determines a sector alignment position corresponding to each block construction information of a DUT being read and performs a dividing process for each data block in the DUT. The video data block is sent to the video decoder portion 4. The sub-picture data block is sent to the SP decoder portion 10. The audio data block is sent to the audio decoder portion 11.

The ARBX portion 22 of the SYS-PRO portion 8 generates a data dividing signal for the dividing process. The data dividing signal is a select signal for dividing data blocks of the DUT corresponding to their types.

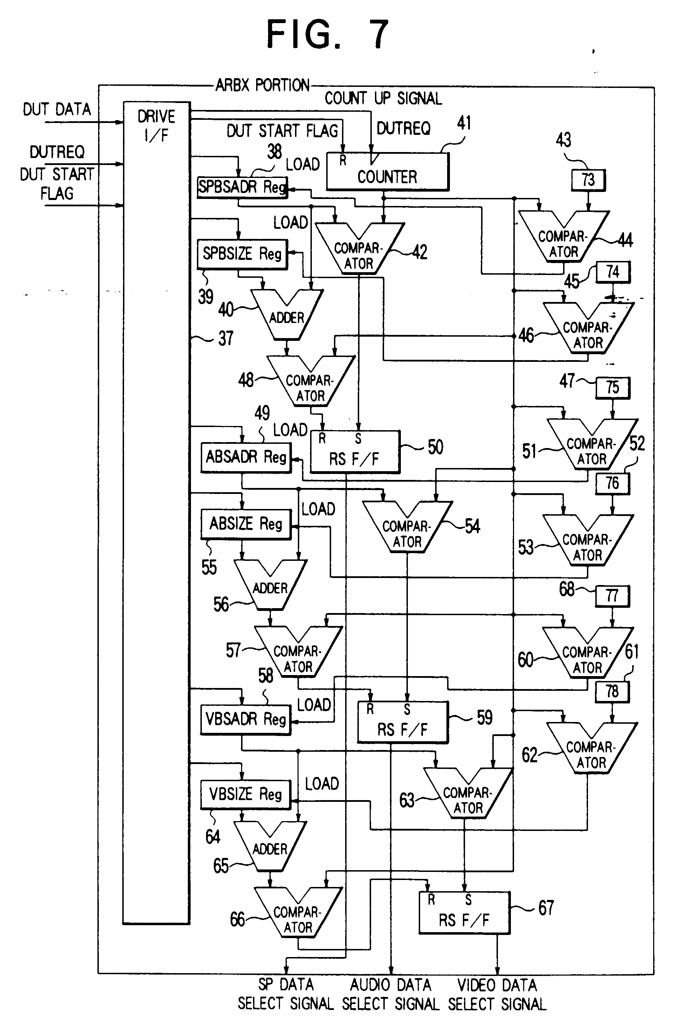

Fig. 7 is a block diagram showing the construction of a data dividing process block of the ARBX portion 22. Referring to Fig. 7, the data dividing process block comprises a drive I/F portion 37, an SPBSADR REG (SPBSADR register) 38, an SPBSIZE REG (SPBSIZE register) 39, an SP end address calculating address adder 40, a DUT data counter 41, an SP data start generating address comparator 42, a constant setting register 43 (transfer counter 73), an SPBSADR register load signal generating address comparator 44, a constant setting register 45 (transfer counter 74), an SPBSIZE register load signal generating address comparator 46, a constant setting register 47 (transfer counter 75), an SP data end generating address comparator 48, an ABSADR REG (ABSADR register) 49, an SP data select signal generating RS flip-flop (RS-F/F) 50, an ABSADR register load signal generating address comparator 51, a constant setting register 52 (transfer counter 76), an ABSIZE register load signal generating address comparator 53, an audio data start generating address comparator 54, an ABSIZE REG (ABSIZE register) 55, an audio end address calculating address adder 56, an audio data start generating address comparator 57, a VBSADR REG (VBSADR register) 58, an audio data select signal generating RS flip-flop 59, a VBSADR register load signal generating address comparator 60, a constant setting register 61 (transfer counter 78), a VBSIZE register load signal generating address comparator 62, a video data start generating address comparator 63, a VBSIZE REG (VBSIZE register) 64, a video end address calculating address adder 65, a video data end generating address comparator 66, a video data select signal generating RS flip-flop 67, and a constant setting register 68 (transfer counter 77). It should be noted that when the DUT data counter 41 counts each transfer data 73 times, data is read to the constant setting register 43 (transfer counter 73). This operation applies to the other registers.

The SYS-PRO portion 8 reads the DUT header and records it to the data RAM 9 and stores the DUT construction identification information of the DUT header to each register of the ABRX portion 22. In addition, the SYS-PRO portion 8 performs the following processes corresponding to the DUT construction identification information.

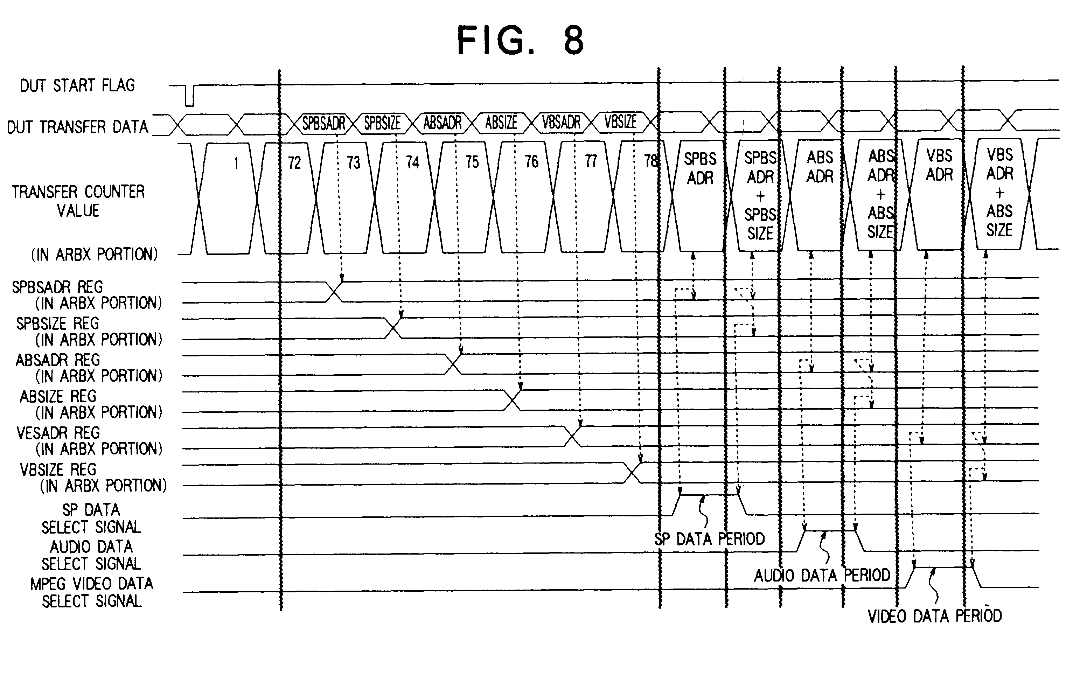

As shown in Fig. 8, the drive I/F 37 sends the parameters (SPBSADR, SPBSIZE, ABSADR, ABSIZE, VBSADR, and VBSIZE) of the DUT construction identification information to each register while the transfer counter are counting from 72 to 78. The address comparators, the adders, and the flip-flops of the ABRX portion 22 generate each data dividing signal (data select signal).

When a signal for selecting sub-picture data (this signal is referred to as SP data select signal) is generated, the parameter SPBSADR is stored in the SPBSADR REG (register) 38 of the ABRX portion 22. The comparator 42 compares the value stored in the register 38 with the DUT data. When they match, a set signal "S" is sent to the flip-flop 50 (RS-F/F) 50. The parameter SPBSIZE is stored in the SPBSIZE REG (register) 39 of the ABRX portion 22. The adder 40 adds the value stored in the register 39 and the value stored in the SPBSADR REG 38. The comparator 48 compares the added result with the DUT data. When they match, a reset signal "R" is sent to the RS-F/F 50. The RS flip-flop 50 operates corresponding to the "S" and "R" signals and thereby generates the sub-picture a sub-picture data select signal. Likewise, an audio data select signal, a video data select signal, and so forth are generated.

The reproducing time period of a DUT can be varied in the range from 0.4 sec. to 0.8 sec. Thus, the entire block length can be varied. However, in the optical disc reproducing apparatus, due to the restriction of hardware (for example, the amount of data reproduced from an optical disc per unit time period is restricted), the entire block length of each DUT is defined as its maximum amount.

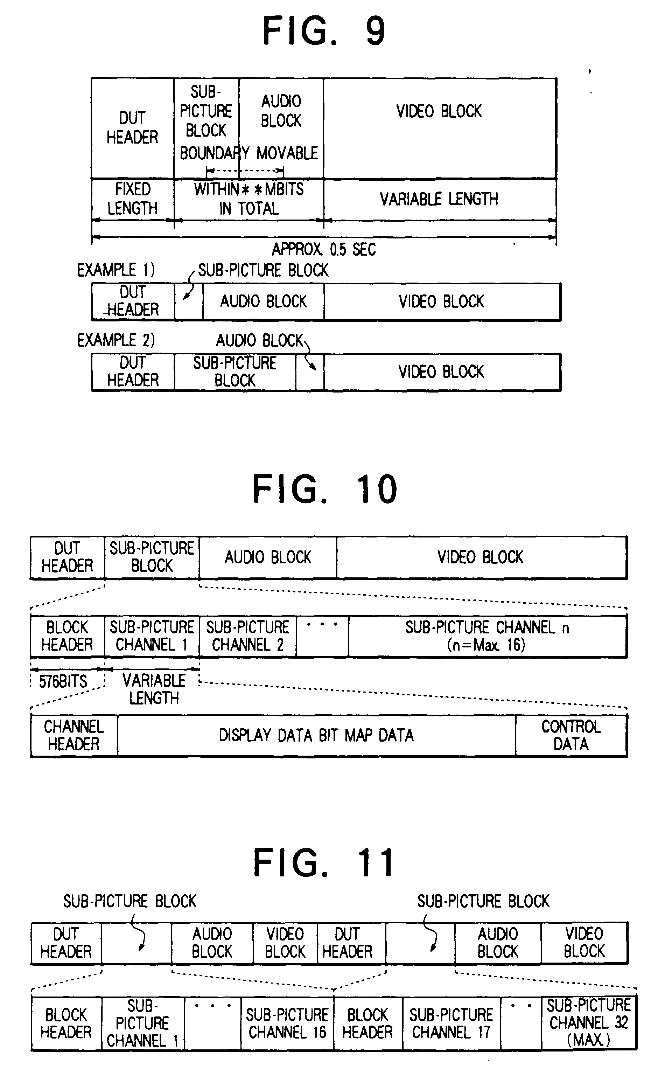

From such a point of view, according to this embodiment, as shown in Fig. 9, the boundary (divided point) of the sub-picture data block and the audio data block can be varied in the range of the maximum block length thereof.

Thus, in a particular DUT, the block length of audio data can be extended so as to improve sound quality. In contrast, the block length of the sub-picture data can be extended so as to increase information amount of for example superimposed text. In addition, the region of the maximum block length of a combination of audio data and sub-picture data can be occupied by only the audio data block or the sub-picture data block.

The sub-picture data in the sub-picture data block is divided into channels that can be independently reproduced. A selected one of the channels is reproduced as sub-picture channel data.

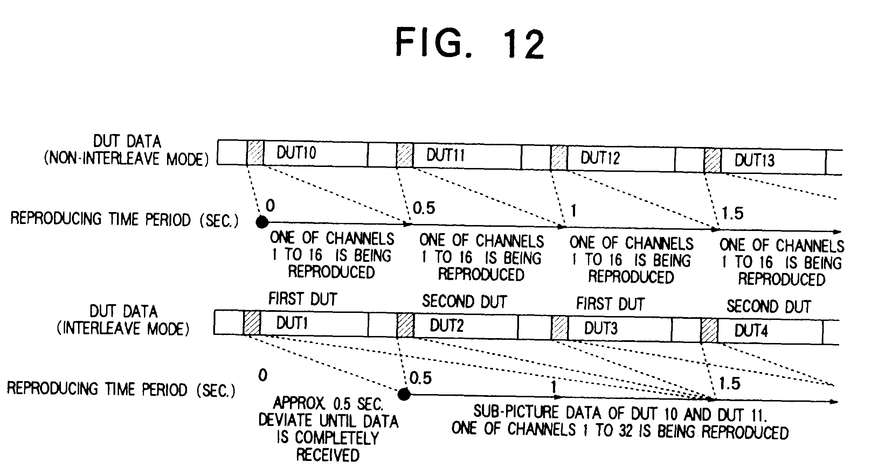

The sub-picture data has two modes (that are non-interleave mode and interleave mode). As shown in Fig. 10, the non-interleave mode has up to 16 channels of sub-picture data in one DUT. On the other hand, as shown in Fig. 11, the interleave mode has up to 32 channels of sub-picture data in two successive DUTs that are equivalent to the reproducing time period of one second.

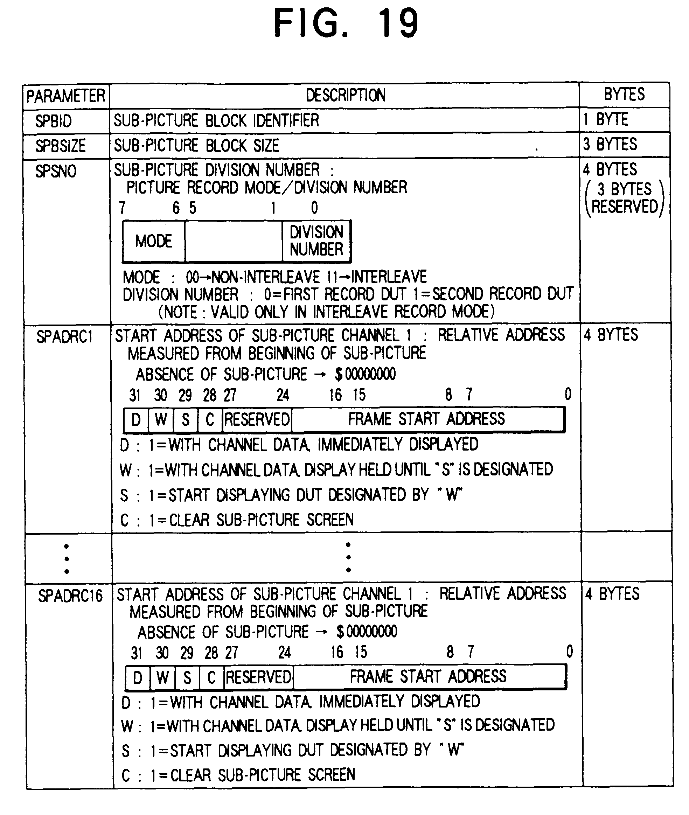

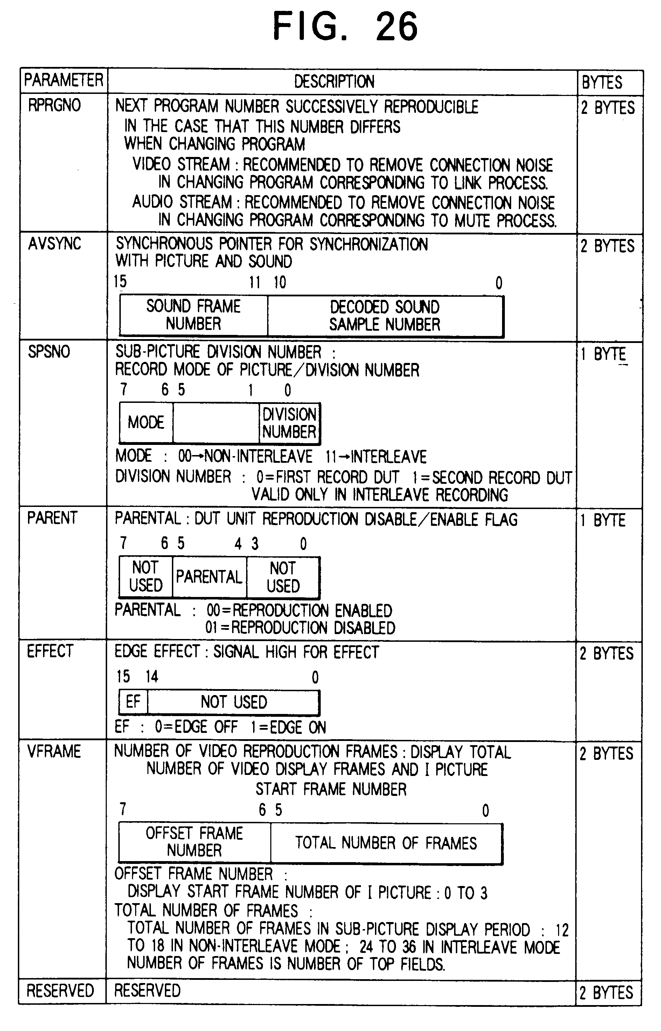

To identify the modes of the sub-picture data, according to this embodiment, as shown in Figs. 19 and 26, information that represents whether sub-picture data is in the interleave mode or non-interleave mode is recorded at the seventh and sixth bits of the SPSNO parameter of the DUT header. In addition, information that represents a DUT number of sub-picture data in the interleave mode is recorded at 0-th bit of the parameter.

In the interleave mode, since sub-picture data reproduced at the same reproducing time period is present in two DUTs, as shown in Fig. 12, the reproducing operation is performed after data of two DUTs (namely, data of 32 channels) have been prepared. Thus, the reproduction in the interleave mode has a delay for one DUT time period (namely, approximately 0.5 sec.) against that in the non-interleave mode.

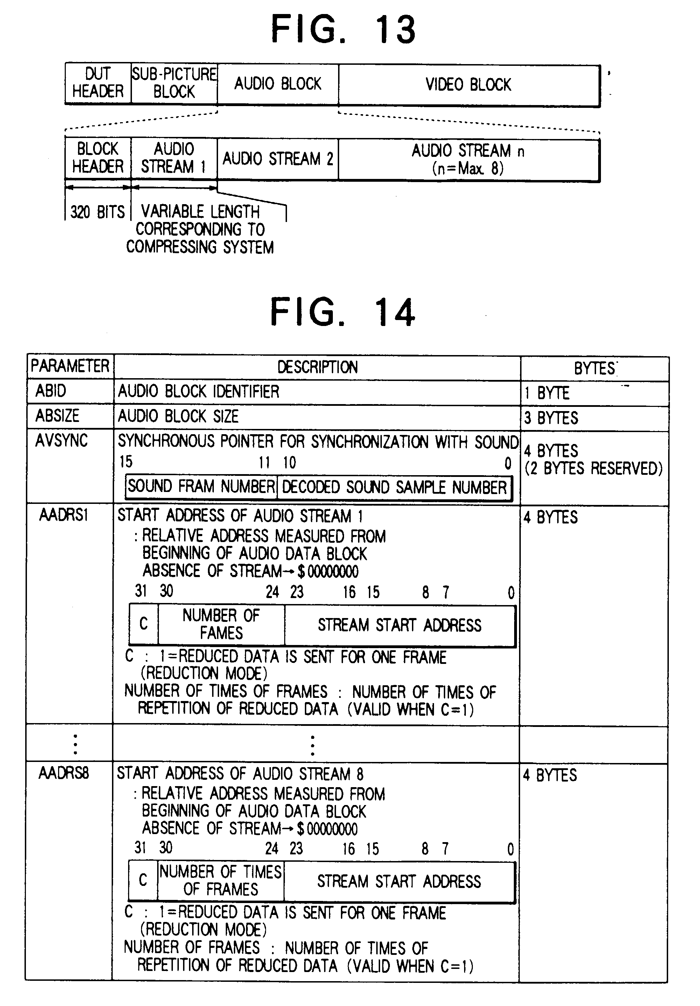

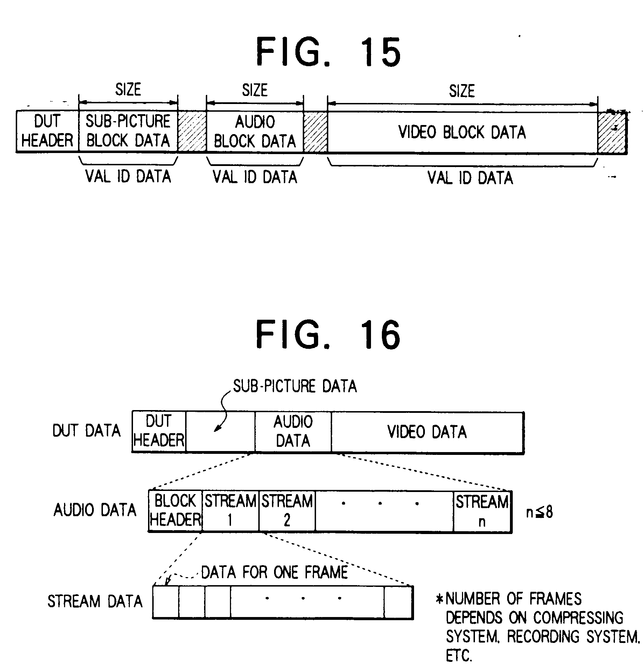

The audio data in the audio data block is divided into streams that can be independently reproduced. Thus, a selected one of the streams is reproduced. Fig. 13 is a schematic diagram showing the construction of the audio data block. As shown in Fig. 13, an audio data block is composed of a plurality of audio streams and an audio block header. The audio block header is followed by the audio steams. As shown in Fig. 14, the audio block header has an audio block identifier (ABID) that represents an audio data block. The audio block identifier (ABID) is recorded at the first byte of the audio block header. As shown in Fig. 15, the audio data block may have invalid data (as denoted by hatched region in Fig. 15). Thus, the audio block header contains an audio block size (ABSIZE), a synchronous pointer (AVSYNC), and stream data start address (AADRS*). The audio block size (ABSIZE) represents the effective block length of the audio data block. The synchronous pointer (AVSYNC) synchronizes audio data with the main picture. The stream data start address (AADRS*) is a relative address measured from the beginning of the audio data block. "*" in AADRS* represents a stream number that ranges from 0 to 8. When relative address = $0000, AADRS* represents "no stream data".

As shown in Fig. 16, each audio stream in the audio data block is divided into smaller units that are referred to as sound frames. When each of sound frames that compose one audio stream has the same data pattern, "1" is set to 31st bit C of the parameter AADRS* shown in Fig. 14.

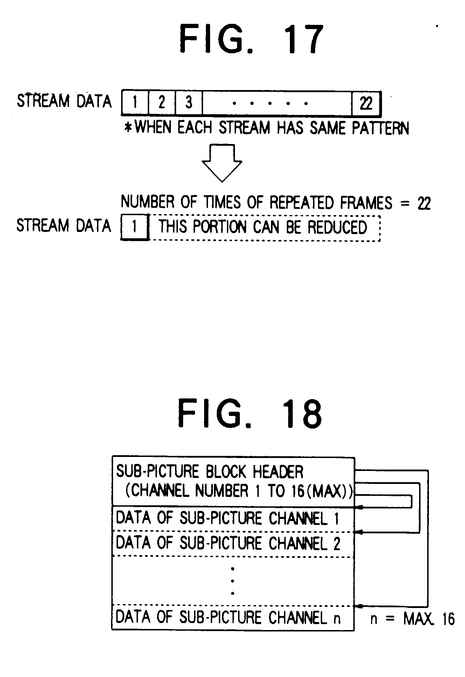

When the optical disc reproducing apparatus has determined the 31st bit C of the parameter AADRS* is "1", the apparatus performs a reproducing process in a reduction mode. In the reduction mode, as shown in Fig. 17, one frame of a repeated data pattern is sent to the sound decoder and the decoded result is repeatedly output for the frames recorded at the 24th to 30th bits of the parameter AADRS*. Thus, it is not necessary to repeatedly send the same data.

Fig. 18 is a schematic diagram showing the construction of the sub-picture data block. As shown in Fig. 18, the sub-picture data block is composed of a plurality of sub-picture channels and a sub-picture block header. The sub-picture block header is followed by the sub-picture channels. As shown in Fig. 19, a sub-picture block identifier (SPBID) that represents a sub-picture block is recorded at the first byte of the sub-picture block header. The sub-picture block header contains a sub-picture block size (SPBSIZE) and sub-picture channel data start address (SPADRC**). The sub-picture block size (SPBSIZE) represents the effective block length of the sub-picture data block. The sub-picture channel data start address (SPADRC**) is a relative address measured from the beginning of the sub-picture data block. "**" of the parameter SPADRC** is a channel number that ranges from 0 to 16.

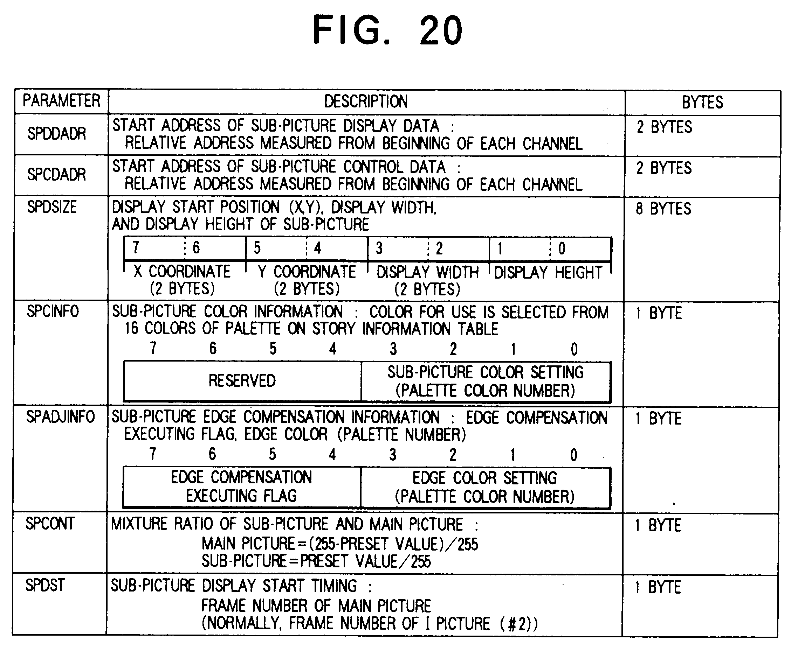

Each sub-picture channel is composed of a channel header and a plurality of sub-picture display data frames. As shown in Fig. 20, the channel header contains a sub-picture display data start address (SPDDADR), a sub-picture control data start address (SPCDADR), a sub-picture display start position (SPDSIZE), a sub-picture color information (SPCINFO), sub-picture edge compensating information (SPADJINFO), a mixed ratio of a sub-picture and a main picture (SPCOUNT), a sub-picture display start timing (SPDST), and so forth.

As shown in Fig. 19, a code that identifies a display control mode of the sub-picture channel data is set at the 31st to 28th bits of the start address (SPADRC**). The 31st to 28th bits are denoted by "D", "W", "S", and "C", respectively. When D = 1, channel data is present. In this mode, a sub-picture is displayed as it is. This mode is referred to as an immediate display mode. When W = 1, although channel data is present, it is not displayed until S = 1. This mode is referred to as a data hold mode. When S = 1, data that is read in the condition of W = 1 is displayed. This mode is referred to as a hold data display mode. When C = 1, the sub-picture screen is cleared. This mode is referred to as a display clear mode. In this mode, a sub-picture screen is cleared rather than a moving picture screen.

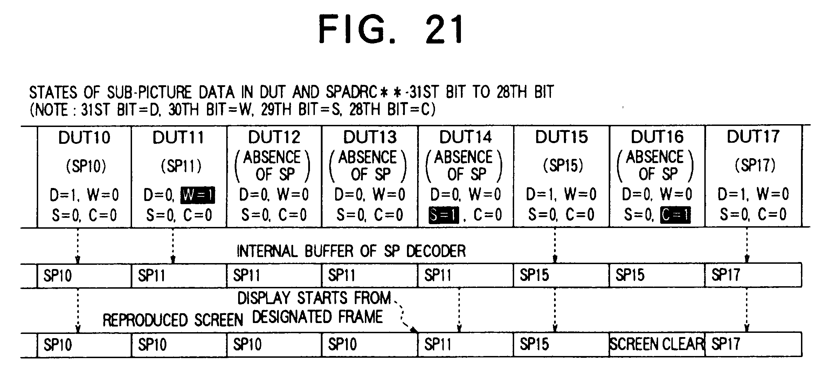

Next, with reference to Fig. 21, sub-picture data display control method corresponding to D, W, S, and C will be described.

In Fig. 21, in DUT 10, D = 1, W = 0, S = 0, and C = 0. Since the mode of DUT 10 is in that "no first read" and "no screen clear", sub-picture data that is read from DUT 10 is reproduced as it is. In DUT 11, D = 0, W = 1, S = 0, and C = 0. The mode of DUT 11 is in that "first read of sub-picture data" and "no screen clear". Thus, the sub-picture data read from DUT 11 is not reproduced at this point, but reproduced when S = 1. Consequently, at this point, the sub-picture data of DUT 10 is displayed on the screen. In DUT 12 and DUT 13, D = 0, W = 0, S = 0, and C = 0. The mode of DUT 12 and DUT 13 is in that "no sub-picture data" and "no screen clear". Thus, sub-picture data is not read and the screen is held as it is. In DUT 14, D = 0, W = 0, S = 1, and C = 0. Thus, the mode of DUT 14 is in that "buffer data reproduction start" and "no screen clear". Consequently, according to a display frame number recorded in the sub-picture display start timing parameter (SPDST) of the channel header shown in Fig. 20, the sub-picture data read from DUT 11 is reproduced. In DUT 16, D = 0, W = 0, S = 0, and C = 1. Thus, the mode of DUT 16 is in that "no sub-picture data" and "screen clear". Consequently, the sub-picture display screen is cleared.

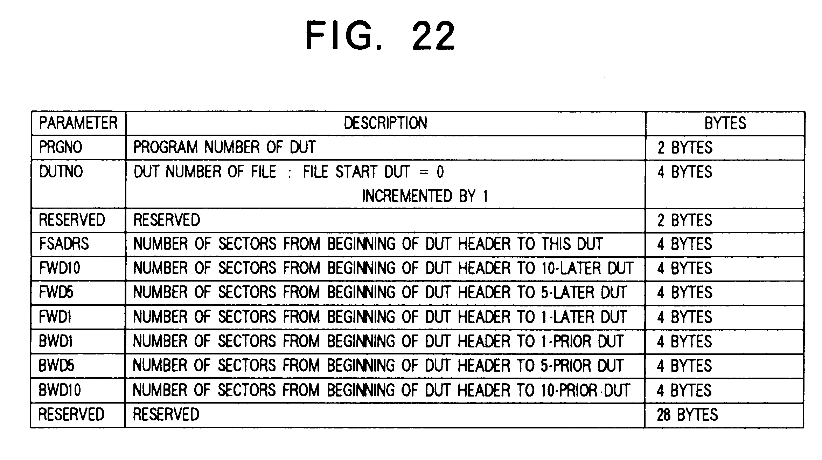

Fig. 22 is a table showing the construction of the DUT identification and search information in the DUT header. As shown in Fig. 22, the DUT identification and search information contains a DUT program number (PRGNO), a DUT serial number (DUTNO), a DUT file start address (FSADRS), and so forth.

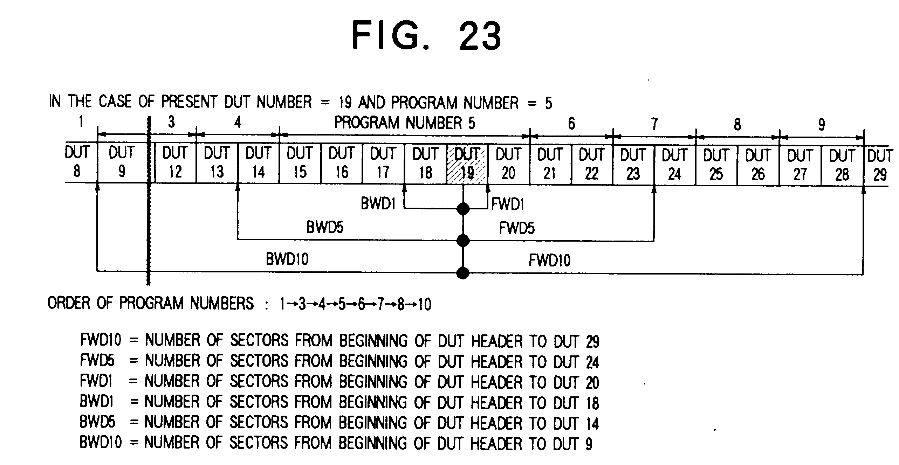

In addition, so as to easily perform a high speed searching operation, as shown in Fig. 23, the DUT identification and search information contains sectors numbers counted from the beginning of the DUT header. The sector numbers are 10 reproducing units forward (FWD10), five reproducing units forward (FWD5), one reproducing unit forward (FWD1), one reproducing unit backward (BWD1), five reproducing units backward (BWD5), and 10 reproducing units backward (BWD10). However, it should be noted that the reproducing units are continuous DUTs to be reproduced.

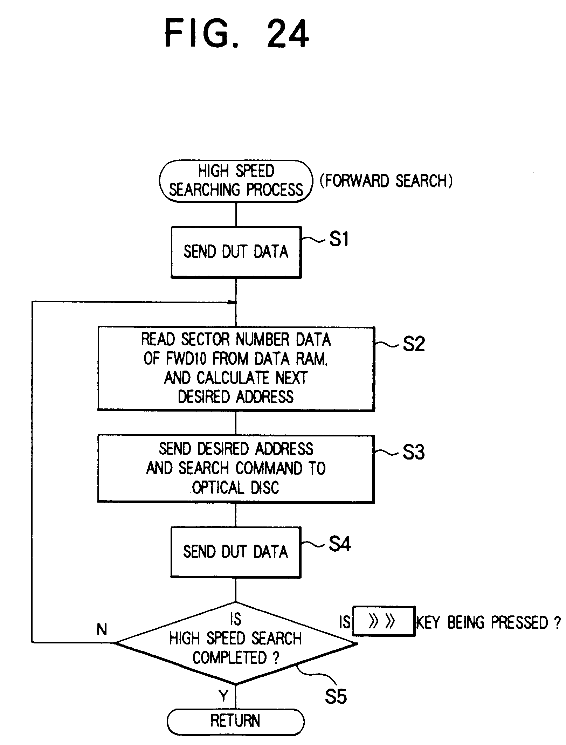

Thus, in the case that the high speed (forward) searching operation is performed, as shown in a flow chart of Fig. 24, when a forward key (>>) of the key input portion 2 is operated (pressed), the optical disc drive portion 6 drives the optical disc, reads DUT data from a desired file, and sends the read data to the SYS-PRO portion 8. When the SYS-PRO portion 8 receives the DUT data (at step S1), the CPU portion reads the sector number data in the high speed searching operation from the data RAM portion 9, calculates the next address (at step S2), and sends the address and the search command to the optical disc drive portion 6 (at step S3). Thus, the optical disc drive portion 6 reads the next DUT data and sends it to the SYS-PRO portion 8 (at step S4). Thus, the fast reproducing operation can be performed. This operation is continued while the fast forward key (>>) of the key input portion 2 is being pressed. When the fast forward key (>>) is released, the CPU portion 7 determines that the high speed searching operation is stopped (at step S5). The fast rewind operation is performed in the same manner as the high speed searching operation.

When the reproduction of DUTs is branched in the middle thereof or the reproduction of a file is completed, since there are no "**" reproducing units forward and backward, the available sector number data is recorded. "**" represents an integer such as 1, 5, or 10.

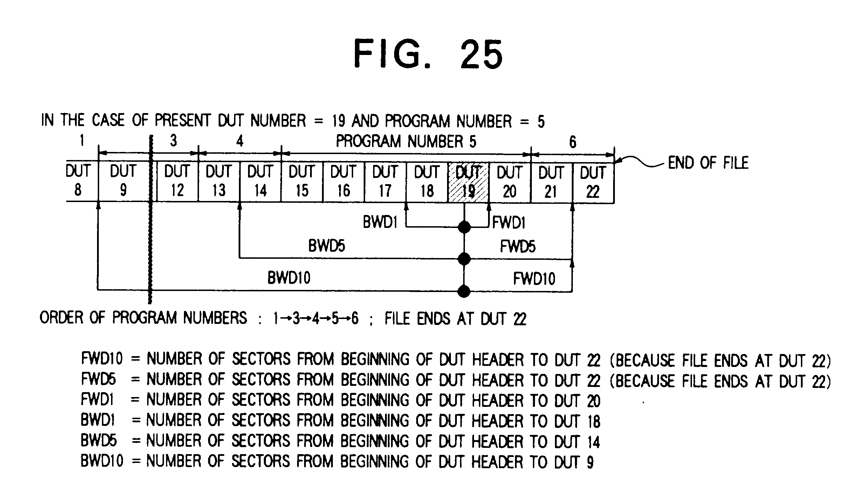

For example, as shown in Fig. 25, when a file is completed before branched to a DUT that is five reproducing units froward (FWD5) or 10 reproducing units forward (FWD10), assuming that DUT 19 is the start point, the sector number with which the file ends (such as DUT 22) is recorded as a DUT that is five reproducing units forward (FWD5) or 10 reproducing units forward (FWD10). The sector number represents the number of sectors counted from the beginning of the DUT header to a desired DUT.

Fig. 26 is a table showing DUT reproducing control information in the DUT header. As shown in Fig. 26, the DUT reproducing control information has parameters that are a related program number (RPROGNO), a picture synchronous pointer (AVSYNC), a sub-picture dividing number (SPSNO), a parental (PARENT), an edge effect (EFECT), and so forth.

The related program number (RPRGNO) is a default program number that can be successively reproduced. When a program is not designated, the related program number (RPGNO) represents a next program to be reproduced.

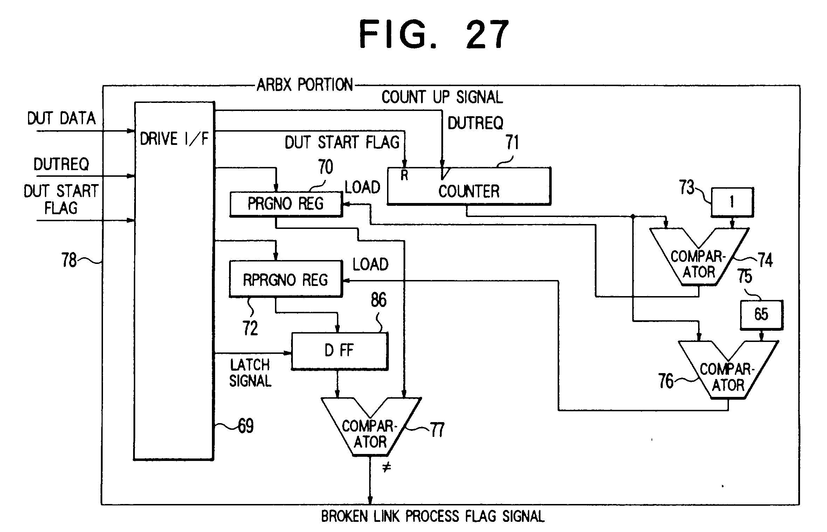

When another program is successively reproduced, since the data is not continued, noise takes place in the sound and picture. To prevent this problem, as shown in Fig. 27, a non-continuous program detecting process block 78 is disposed in the ARBX portion 22.

Referring to Fig. 27, the non-continuous program detecting process block 78 comprises a drive I/F portion 69, a PRGNO register 70, a DUT data counter 71, a RPRGNO register 72, a constant setting register 73 (transfer counter 1), a PRGNO register load signal generating address comparator 74, a constat setting register 75 (transfer counter 65), a RPRGNO register load signal generating address comparator 76, and a broken link process flag signal generating comparator 77.

When a program other than a program designated corresponding to the DUT reproducing control information is reproduced, it is determined that the comparing process of one DUT prior is completed. The detected signal that is a latch signal is output to a D-type flip-flop (D-F/F) 86. Thus, the D-type flip-flop (D-F/F) 86 outputs a related program number of a DUT of one reproducing unit backward. On the other hand, a program number of a DUT that is being reproduced is read to the register 70. The D-type flip-flop (D-F/F) 86 compares the related program number of the DUT that is one reproducing unit backward with the program number of the program being reproduced. Thus, a broken link process enable flag signal is generated. After the above-determination, sound is muted for several frames and a process for smoothly switching moving picture data (namely, broken link process) is performed.

Next, a process sequence for which the broken link enable flag signal is generated will be described.

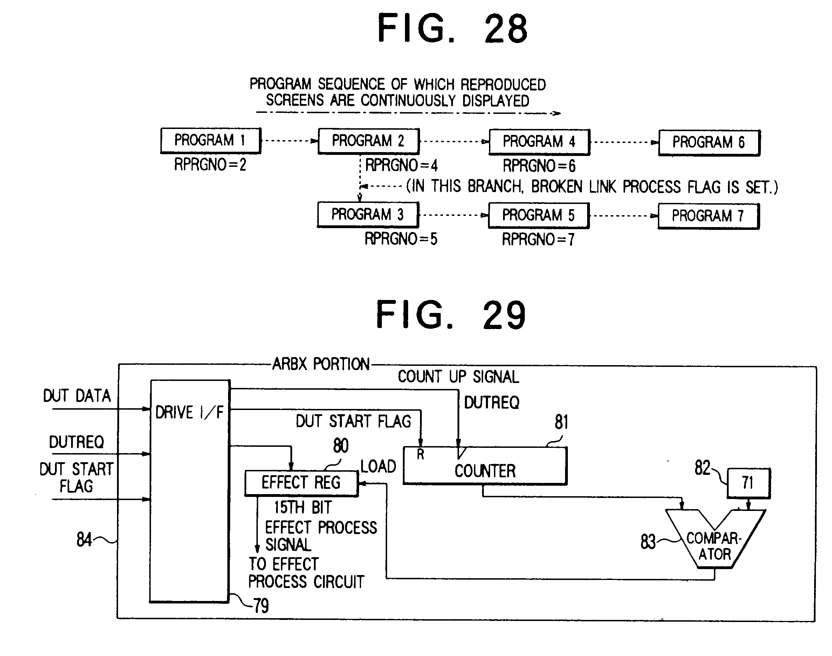

For example, as shown in Fig. 28, when programs are successively reproduced in the order of program "1" -> program "2" -> program "4" -> program "6", the program number (RPRGNO) in the program "1" becomes "2" and the program number (RPRGNO) in the program "2" becomes "4".

In the case that the program "2" is branched to the program "3" by the user operation, when the data of the program "3" is read, the just preceding program is "4". Thus, the program "3" cannot be reproduced. In this situation, the broken link process flag signal becomes active.

The edge effect parameter (EFFECT) shown in Fig. 26 is information that represents the occurrence of the edge effect in picture data and sound data for each DUT.

Fig. 29 is a block diagram showing the construction of an effect detecting block 84 in the ARBX portion 22. Referring to Fig. 29, the effect detecting block 84 comprises a drive I/F portion 79, an effect register 80, a DUT data counter 81, a constant setting register 82 (transfer counter 71), and an effect register load signal generating address comparator 83. The effect detecting block 84 receives the edge effect parameter (EFFECT) from the DUT reproducing control information and thereby generates an effect process signal.

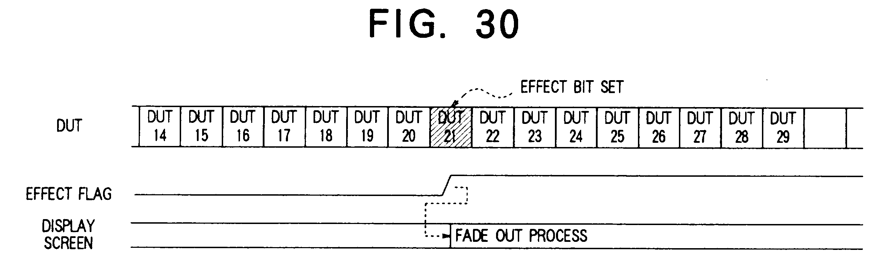

In this case, as shown in Fig. 30, when the EFFECT bit of for example DUT 21 is set, the effect flag becomes active and thereby the effect process signal is generated. When this signal is sent to the CPU portion 7, the video decoder portion 4, the audio decoder portion 11, the SP decoder portion 10, the D/A and reproducing process portion 5, an external device (such as lighting device or an air conditioner), and so forth, various edge effects can be obtained. In this embodiment, as shown in Fig. 30, the display screen can be faded out when a main picture is ended.

In addition, the effect process includes a fad-in process, lighting varying process that varies the brightness of an external lighting (for example, the external lighting is turned off in a climax scene of a horror story), control of external illumination, control of external air-conditioning facility (for example, the room temperature is lowered in a cold scene of a snow-covered mountain and raised in a hot scene of a desert), and sound effects of such as clapping of hands and putting in interlude.

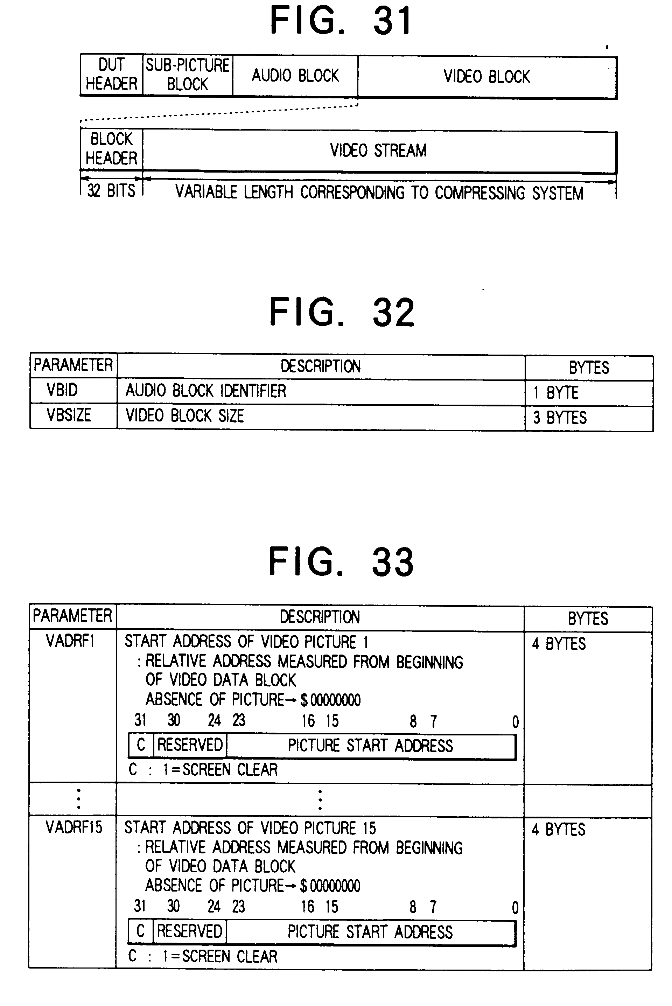

Fig. 31 is a block diagram showing the construction of a video data block. As described above, the video data block is composed of a plurality of video streams and a video block header. The video data header is followed by the video streams. As shown in Fig. 32, the video block header includes a video block identifier (VBID), a video block size (VBSIZE), and so forth. The video block identifier (VBID) represents that the block is a video block. The video block size (VBSIZE) represents the effective block length of a video stream in the video data block.

As shown in Fig. 33, the video block construction information in the DUT header contains the start address of each video picture represented by a relative address (VADRF*) measured from the beginning of the video data block. When the relative address = $0000, the video block construction information represents "no picture data". When the 31st bit C of the relative address VADRF is set to "1", the screen is cleared. In this case, only the main picture is cleared, rather than the sub-picture.

Since the DUT header has information that represents the start address of each video picture, high speed special reproducing operation such as double speed reproducing operation can be accomplished.

The sub-picture reproducing portion that performs the reproducing process for sub-picture data counts the VSYNC signal (vertical synchronous signal) that is input from the main picture decoder portion so as to synchronize the reproduction of the sub-picture with the reproduction of the main picture corresponding to the frame number of the main picture.

However, as descried in the related art section of this document, the number of frames that are obtained as a result of decoding of one GOP (12 pictures) varies in the range from 12 to 18. Thus, the number of frames varies depending on each DUP. Consequently, when only the frame number of the main picture that is obtained by counting the VSYNC signal (vertical synchronous signal) is used, the last frame of each DUT cannot be determined. Thus, precise synchronization of main picture and sub-picture cannot be obtained.

Thus, in this embodiment, as shown in Fig. 26, as the DUT reproducing control information in the DUT header, a VFRAM parameter that represents the number of frames of a video data block to be reproduced and the display start frame number of an I picture that is a reference screen is provided. The display start frame number of the I picture is used to correct the deviation of the count of the reproduced frames due to an occurrence of an error. The display start frame number will be described later.

As described above, the sub-picture data has the non-interleave mode and the interleave mode shown in Figs. 10 to 12. In the interleave mode, since sub-picture data to be reproduced is a sub-picture channel that is selected from two successive DUTs, when the total number of reproducing frames and the I picture display start frame number are simply added to the DUT header, the reproduction of the video data cannot be correctly synchronized with the reproduction of the sub-picture data.

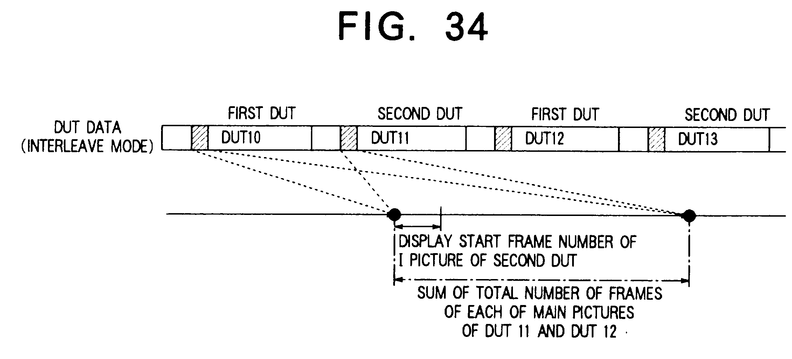

In this embodiment, as shown in Fig. 34, in the interleave mode, two successive DUTs are treated as one display group. The sum of the total number of reproducing frames of each of the two DUTs is recorded at the DUT header of each DUT. As the display start frame number of the I picture, the frame number of the I picture that is generated from the picture data of the second DUT is recorded. Thus, even if the sub-picture data is in the interleave mode, the reproduction of the video data can be correctly synchronized with the reproduction of the sub-picture data.

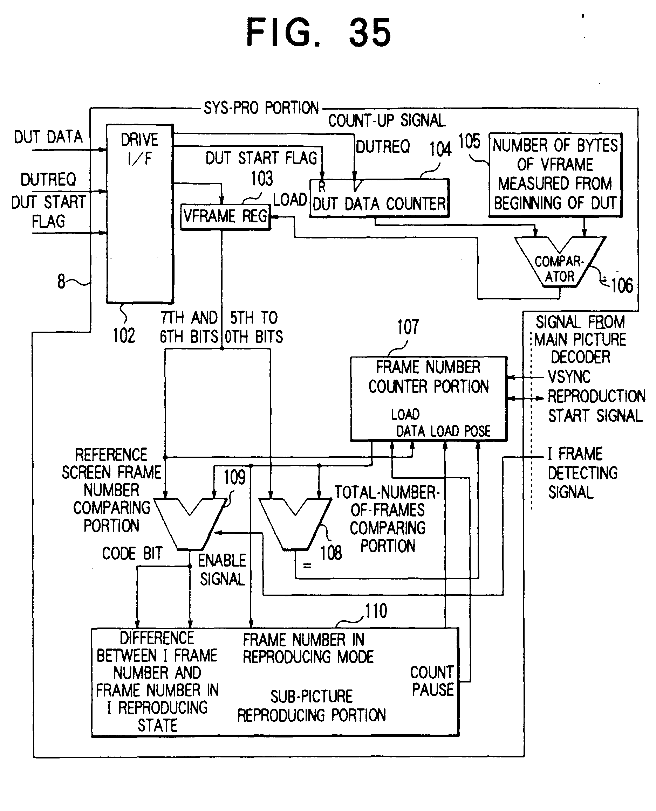

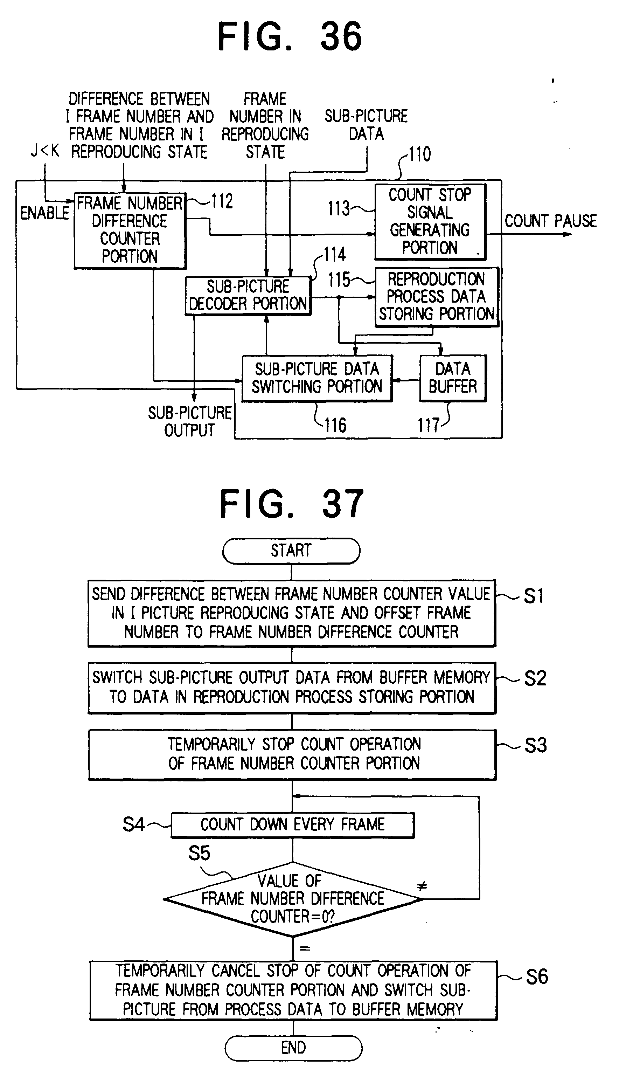

Next, the construction of a frame number generating process block of the SYS-PRO 8 that is supplied to the sub-picture reproducing portion will be described. Fig. 35 is a block diagram showing the construction of the frame number generating process block. Fig. 36 is a block diagram showing the construction of a sub-picture reproducing portion of the process block. Fig. 37 is a flow chart showing the process sequence of the sub-picture image reproducing portion.

DUT data is input to the SYS-PRO portion 8 through a drive I/F portion 102. A DUT data counter 104 counts the number of DUTs being input. The count value is sent to a comparator 106. The comparator 106 compares the count value with the start address value of the VFRAME parameter of the DUT header stored in a register 105. When they match, the comparator 106 sends a load signal to a register 103 so as to retrieve the total number of reproduced frames (fifth to 0-th bits) and the display start frame number (seventh and sixth bits) of the I picture of the VFRAME parameter from the DUT data. The total number of reproduced frames (fifth to 0-th bits) are sent to a comparator 108 and the I picture display start frame number (seventh and sixth bits) are sent to a comparator 109.

On the other hand, the frame number counter portion 107 counts the frame number of the main picture that is being reproduced corresponding to the VSYNC signal (vertical synchronous signal) and the reproducing start signal that are received from the main picture decoder portion. The value of the frame number is supplied to a sub-picture reproducing portion 110 and the comparators 108 and 109.

The comparator 108 compares the total number of reproduced frames (fifth to 0-th bits) with the reproduced frame number of the main picture. When they match, the process block resets the frame number counter portion 107 and restarts counting the reproduced frame number.

Thus, even if the total number of frames of the main picture is variable, the correct reproduced frame number is supplied to the sub-picture reproducing portion 110.

However, in such a method, the reproduced frame number of the main picture may deviate due to an occurrence of an error. To prevent that, in this embodiment, the reproduced frame number is corrected in the following manner.

In other words, the comparator 109 compares the display start frame number (seventh and sixth bits) of the I picture contained in the VFRAME parameter with the reproduced frame number. The comparison is performed when the I frame detecting signal (that is output when the main picture decoder determines that the I picture frames have been reproduced) is input. When there is a difference between these values, the reproduced frame number obtained by the frame number counter portion 107 deviates from the correct value for the difference. The difference is supplied to the sub-picture reproducing portion 110. The sub-picture reproducing portion 110 performs different processes depending to the difference between the reproduced frame number (hereinafter referred to as K) and the I picture display start frame number (hereinafter referred to as J). The reproduced frame number K is a frame number of which the I picture is reproduced. The I picture display start frame number J is a real frame number of which the I picture is reproduced.

When K = J, since the reproduced frame number has no deviation, no special process is performed.

When K > J, as shown in Figs. 36 and 37, the difference between K and J is set to a frame number difference counter portion 112 (at step S1). The sub-picture reproducing portion 110 causes a sub-picture data switching portion 116 to select sub-picture data of one frame prior that is stored in a reproduction process data storing portion 115 and to input it to a sub-picture decoder portion 116 (at step S2). The sub-picture data switching portion 116 switches the data input to the sub-picture decoder portion 14 from the sub-picture data of the present frame stored in the buffer memory 117 to the sub-picture data of one frame prior stored in the reproduction process data storing portion 115. When the difference between K and J is stored in the frame number difference counter portion 112, the data input to the sub-picture decoder portion 114 is switched from the buffer memory 117 to the reproduction process data storing portion 115. At this point, a count stop signal generating portion 113 generates a count stop signal and outputs it to the frame number counter portion 107. Thus, the frame number counter portion 107 stops the counting operation (at step S3).

Thereafter, the frame number difference counter portion 112 counts down to 0 at intervals of frame display (at step S4). When the count value becomes 0 (at step S5), the frame number difference counter portion 112 causes the sub-picture data switching portion 116 to switch the data input from the sub-picture decoder portion 14 to the buffer memory 117 (at step S6). Thus, the picture data can be reproduced for the frames of the difference between K and J.

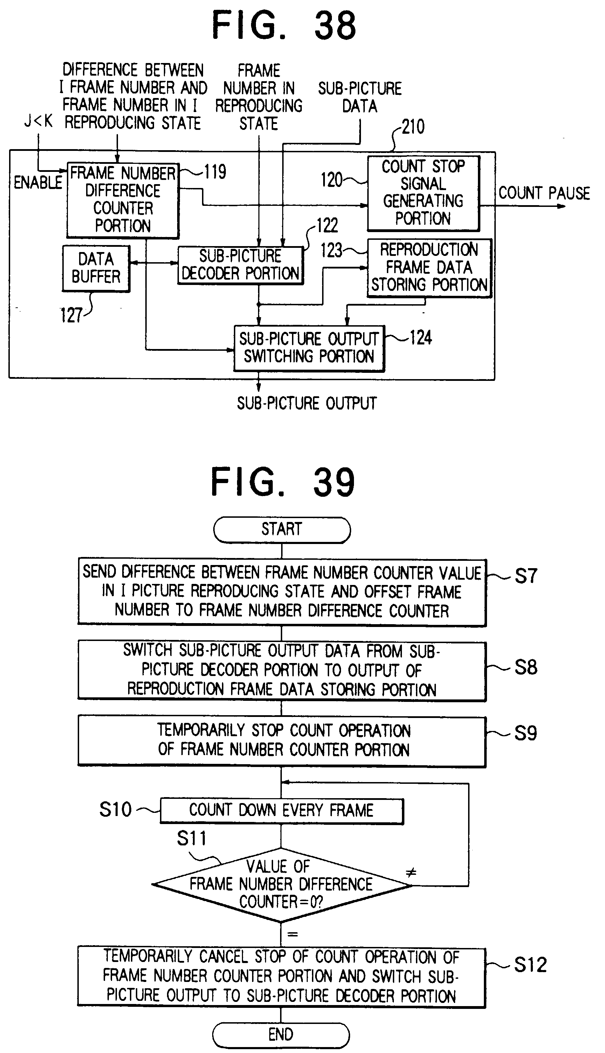

Fig. 38 is a block diagram showing the construction of a sub-picture process portion of a frame number generating process block according to another embodiment of the present invention. Fig. 39 is a flow chart showing the process sequence of the sub-picture process portion of Fig. 38.

In this embodiment, decoded sub-picture data of one frame prior is stored in the reproduction frame data storing portion 123.

When K > J, the sub-picture reproducing portion 210 sets the difference between K and J to a frame number difference counter portion 119 (at step S7). Thereafter, the sub-picture reproducing portion 210 causes a sub-picture data output switching portion 124 to select decoded sub-picture data of one frame prior that is stored in a reproduction frame data storing portion 123 and to output it (at step S8). The sub-picture data output switching portion 124 switches the output of the sub-picture from the decoded sub-picture data of the present frame received from the sub-picture decoder portion 122 to the decoded sub-picture data of one frame prior stored in the reproduction frame data storing portion 123. Thus, when the difference between K and J is stored in the frame number difference counter portion 119, the picture output is switched from the decoded sub-picture data of the present frame received from the sub-picture decoder portion 122 to the decoded sub-picture data of one frame prior stored in the reproduction frame data storing portion 123. At this point, the count stop signal generating portion 120 generates a count stop signal and outputs it to the frame number counter portion 107. Thus, the frame number counter portion 107 stops the counting operation (at step S9). Consequently, the picture being reproduced can be displayed for frames of the difference between K and J.

Thereafter, the frame number difference counter portion 112 counts down to 0 at intervals of frame display (at step S10). When the count value becomes 0 (at step S11), the frame number difference counter portion 119 causes the sub-picture data output switching portion 124 to switch the sub-picture output to the decoded sub-picture data of the present frame received from the sub-picture decoder portion 122 (at step S12).

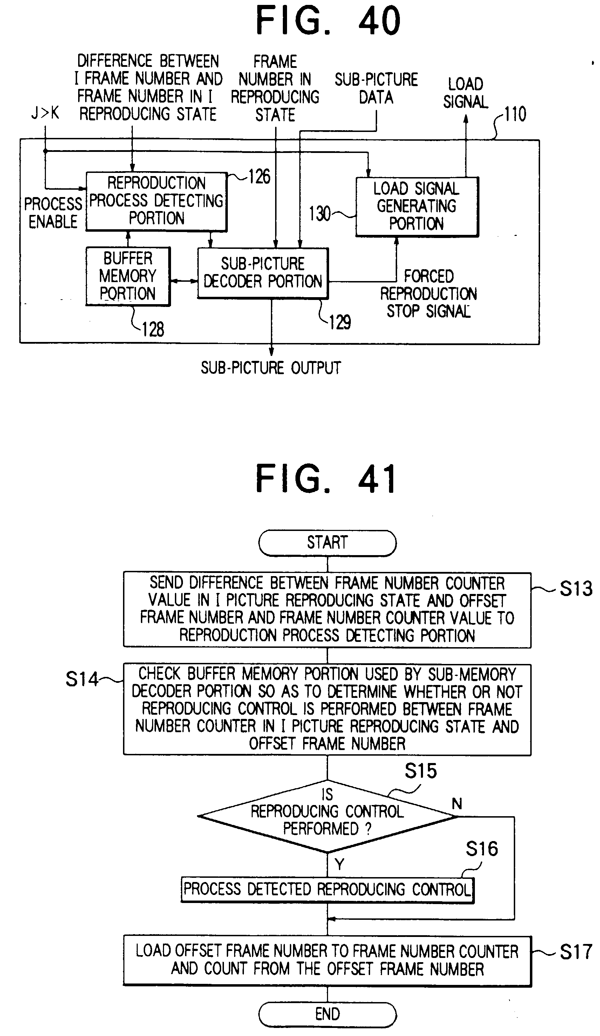

Fig. 40 is a block diagram showing the construction of a process block of the picture reproducing portion in the case that the comparator 109 of the frame number generating process block outputs a compared result of K < J. Fig. 41 is a flow chart showing the process sequence of the block of Fig. 40.

When K < J, the difference between the value of a reproduced frame number (K) of the I picture and the value of a display start frame number (J) of the I picture and the value of a reproduced frame number are sent to the reproduction process detecting portion 126 (at step S13). Thereafter, the reproduction process detecting portion 126 determines whether or not sub-picture data has been reproduced for frames K to J corresponding to pre-decoded sub-picture data stored in the buffer memory portion 128 (at steps S14 and S15). If the reproducing control has been performed, the reproduction process detecting portion 126 controls the sub-picture sub-picture decoder porion 129 so as to forcedly reproduce sub-picture of a frame most close to the frame number of a main picture being reproduced (at step S16). Thereafter, the load sinal generating portion 130 generates a load signal so as to load the display start frame number (J) of the I picture to the frame number counter portion 107 (at step S17). Thus, the display of the frame number K is branched to the display of the frame number J.

As described above, according to the present invention, a plurality of data blocks such as main picture, sound, sub-picture, and so forth are treated as one data unit. In particular, even if sound data and sub-picture data are set for a plurality of channels or a plurality of streams, they can be precisely and stably divided corresponding to a block header in the data blocks.

In addition, according to the present invention, a plurality of data blocks such as main picture, sound, and sub-picture are treated as one data unit that is synchronously reproduced. In particular, even if the number of display frames of the data unit of the main picture is variable, each data block can be precisely and stably synchronized at intervals of the frame display of the main picture.

Although the present invention has been shown and described with respect to the best embodiment thereof, it should be understood by those skilled in the art that various changes, omissions, and additions in the form and detail thereof may be made therein, under the terms of the appended claims.

## Claims

1. A recording medium on which at least one data unit is recorded, said data unit comprising a plurality of types of data blocks, and further comprising:
a unit header disposed at the beginning of the data unit and adapted for enabling the control of each of the data blocks as independent data of the data unit; and
a block header disposed at the beginning of each of the data blocks and adapted for controlling data of the data block, characterised in that
the data blocks are composed of a main picture data block, a sound data block and a sub-picture data block, whereby the main picture data block has main picture stream data,
the sound data block has sound stream data, and
the sub-picture data block has sub-picture stream data,
said sub-picture stream data being composed of bit map data; and in that
the unit header has an address (ABSADR) of the sound data block, said address (ABSADR) being a relative address measured from the beginning of the data unit, and being suitable to synchronise reproduction of the main picture data block and the sound data block.

2. The recording medium of claim 1, wherein at least one of the data blocks is divided into a plurality of groups of data, and
wherein the block header of the data block has control information that represents divided positions of the groups of data of the data blocks.

3. The recording medium of claim 1, wherein the effective block length of the sound data block and the sub-picture data block is fixed, the boundary of the sound data block and the sub-picture data block being variable in the range of the effective block length.

4. The recording medium of claim 1 on which more than one data unit are recorded, wherein a plurality of one type of data block of each of said data units form a set of data blocks, data blocks in the same set being suitable to be processed at a same processing time, and
wherein the unit header of a predetermined data unit has information that identifies the position of the data block belonging to said predetermined data unit in said set of data blocks.

5. The recording medium of claim 1, wherein the sound block header of the sound data block further includes stream position information and stream construction information, the stream position information being adapted for identifying the start point and size (ABSIZE) of the sound stream data, the stream construction information being adapted for identifying the construction of sound stream data.

6. The recording medium of claim 5, wherein the sound stream data is divided into plurality of sound frames, and
wherein the stream construction information includes information that represents whether or not the data pattern of each of the sound frames is the same.

7. The recording medium of claim 1, wherein the sub-picture block header of the sub-picture data block further includes channel position information and channel display control information, whereby the channel position information is adapted for representing the start point and size (SPBSIZE) of each of the sub-picture channel data, the channel display control information being adapted for identifying the display control state of each of the sub-picture channel data.

8. The recording medium of claim 1 on which more than one data unit are recorded, wherein the unit header of a first data unit has identification and search information, the identification and search information comprising:
a program number (PRGNO) that shows which program said first data unit belongs to, the program being composed of a set of data units;
a data unit number (DUTNO) that represents a serial number of said first data unit in a file, file being composed of programs; and
information that represents a distance from the beginning of the unit header of said first data unit to a second data unit spaced apart therefrom by ± n data units.

9. The recording medium of claim 8, wherein the distance is represented by a number of sectors.

10. The recording medium of claim 1, wherein the unit header has reproducing control information necessary for reproducing a predetermined data unit, the reproducing control information including an effect setting flag (EF) for providing an effect to picture data and sound data of the data unit.

11. The recording medium of claim 1, wherein the picture stream data of the main picture data block is composed of a group of a predetermined number of pictures compressed according to the MPEG standard, the unit header further including the total number of frames of the main picture data block being reproduced and information that represents a display start frame number of a reference screen of the picture data.

12. The recording medium of claim 1 on which more than one data unit are recorded, wherein the sub-picture data blocks are disposed in N data units, where N is any integer that is equal to or larger than 1, the unit header further including information (VFRAME) that represents the total number of frames in the N data units and a display start frame number of a reference screen in the picture data.

13. The medium as set forth in claim 1, wherein the main picture block header further has identification information (VBID) and picture start address information (VADRF*).

14. A recording medium on which at least one data unit is recorded, said data unit comprising a plurality of types of data blocks, and further comprising:
a unit header disposed at the beginning of the data unit and adapted for enabling the control of each of the data blocks as independent data of the data unit; and
a block header disposed at the beginning of each of the data blocks and adapted for controlling data of the data block, characterised in that
the data blocks are composed of a main picture data block, a sound data block and a sub-picture data block, whereby the main picture data block has main picture
stream data, the sound data block has sound stream data, and
the sub-picture data block has sub-picture stream data,
said sub-picture stream data being composed of bit map data; and in that
the unit header has an address (SPBSADR) of the sub-picture data block, said address (SPBSADR) being a relative address measured from the beginning of the data unit, and being suitable to synchronise reproduction of the main picture data block and the sub-picture data block.

15. The recording medium of 14, wherein at least one of the data blocks is divided into a plurality of groups of data, and
wherein the block header of the data block has control information that represents divided positions of the groups of data of the data blocks.

16. The recording medium of claim 14, wherein the effective block length of the sound data block and the sub-picture data block is fixed, the boundary of the sound data block and the sub-picture data block being variable in the range of the effective block length.

17. The recording medium of claim 1 on which more than one data unit are recorded, wherein a plurality of one type of data block of each of said data units form a set of data blocks, data blocks in the same set being suitable to be processed at a same processing time, and
wherein the unit header of a predetermined data unit has information that identifies the position of the data block belonging to said predetermined data unit in said set of data blocks.

18. The recording medium of claim 14, wherein the sound block header of the sound data block further includes stream position information and stream construction information, the stream position information being adapted for identifying the start point and size (ABSIZE) of the sound stream data, the stream construction information being adapted for identifying the construction of sound stream data.

19. The recording medium of claim 18, wherein the sound stream data is divided into plurality of sound frames, and
wherein the stream construction information includes information that represents whether or not the data pattern of each of the sound frames is the same.

20. The recording medium of claim 14, wherein the sub-picture block header of the sub-picture data block further includes channel position information and channel display control information, whereby the channel position information is adapted for representing the start point and size (SPBSIZE) of each of the sub-picture channel data, the channel display control information being adapted for identifying the display control state of each of the sub-picture channel data.

21. The recording medium of claim 14, on which more than one data unit are recorded, wherein the unit header of a first data unit has identification and search information, the identification and search information comprising:
a program number (PRGNO) that shows which program said first data unit belongs to, the program being composed of a set of data unit;
a data unit number (DUTNO) that represents a serial number of said first data unit in a file, file being composed of programs; and
information that represents a distance from the beginning of the unit header of said first data unit to a second data unit spaced apart therefrom by ±n data units.

22. The recording medium of claim 21, wherein the distance is represented by a number of sectors.

23. The recording medium of claim 14, wherein the unit header has reproducing control information necessary for reproducing a predetermined data unit, the reproducing control information including an effect setting flag (EF) for providing an effect to picture data and sound data of the data unit.

24. The recording medium of claim 14, wherein the picture stream data of the main picture data block is composed of a group of a predetermined number of pictures compressed according to the MPEG standard, the unit header further including the total number of frames of the main picture data block being reproduced and information that represents a display start frame number of a reference screen of the picture data.

25. The recording medium of claim 14 on which more than one data unit are recorded, wherein the sub-picture data blocks are disposed in N data units, where N is any integer that is equal to or larger than 1, the unit header further including information (VFRAME) that represents the total number of frames in the N data units and a display start frame number of a reference screen in the picture data.

26. The medium as set forth in claim 14, wherein the main picture block header further has identification information (VBID) and picture start address information (VADRF*).

## Patentansprüche

1. Aufzeichnungsmedium, auf dem mindestens eine Dateneinheit aufgezeichnet ist, wobei die Dateneinheit eine Vielzahl von Typen von Datenblöcken aufweist und ferner aufweist:
einen Einheitskopf, der am Anfang einer Dateneinheit angeordnet ist und zur Freigabe der Steuerung jedes der Datenblöcke als unabhängige Daten der Dateneinheit geeignet ist; und
einen Blockkopf, der am Anfang jedes der Datenblöcke angeordnet ist und zum Steuern von Daten der Datenblöcke geeignet ist,
dadurch gekennzeichnet, daß:
die Datenblöcke aus einem Hauptbilddatenblock, einem Tondatenblock und einem Teilbilddatenblock bestehen,
wobei der Hauptbilddatenblock Hauptbildstromdaten aufweist,
der Tondatenblock Tonstromdaten aufweist und
der Teilbilddatenblock Teilbildstromdaten aufweist,
wobei die Teilbildstromdaten aus Bitabbildungsdaten bestehen; und daß
der Einheitskopf eine Adresse (ABSADR) des Tondatenblocks aufweist, wobei die Adresse (ABSADR) eine relative Adresse ist, die ab dem Beginn der Dateneinheit gemessen wird, und geeignet ist, eine Wiedergabe des Hauptbilddatenblocks und des Tondatenblocks zu synchronisieren.

2. Aufzeichnungsmedium nach Anspruch 1, wobei mindestens einer der Datenblöcke in eine Vielzahl von Datengruppen geteilt ist und
wobei der Blockkopf des Datenblocks Steuerungsinformation aufweist, die geteilte Positionen der Datengruppen der Datenblöcke darstellt.

3. Aufzeichnungsmedium nach Anspruch 1, wobei die effektive Blocklänge des Tondatenblocks und des Teilbilddatenblocks fest ist, wobei die Grenze des Tondatenblocks und des Teilbilddatenblocks im Bereich der effektiven Blocklänge variabel ist.

4. Aufzeichnungsmedium nach Anspruch 1, auf dem mehr als eine Dateneinheit aufgezeichnet sind, wobei eine Vielzahl eines Datenblocktyps jeder der Dateneinheiten einen Satz von Datenblöcken bilden, wobei Datenblöcke im gleichen Satz geeignet sind, in einer gleichen Verarbeitungszeit verarbeitet zu werden, und
wobei der Einheitskopf einer vorbestimmten Dateneinheit Information aufweist, die die Position des Datenblocks identifiziert, der zu der vorbestimmten Dateneinheit in dem Satz von Datenblöcken gehört.

5. Aufzeichnungsmedium nach Anspruch 1, wobei der Tonblockkopf des Tondatenblocks ferner Strompositionsinformation und Stromaufbauinformation aufweist, wobei die Strompositionsinformation zum Identifizieren des Anfangspunkts und der Größe (ABSIZE) der Tonstromdaten geeignet ist, wobei die Stromaufbauinformation zum Identifizieren des Aufbaus der Tonstromdaten geeignet ist.

6. Aufzeichnungsmedium nach Anspruch 5, wobei die Tonstromdaten in eine Vielzahl von Tonrahmen geteilt sind und
wobei die Stromaufbauinformation Information aufweist, die angibt, ob das Datenmuster jedes der Tonrahmen das gleiche ist oder nicht.

7. Aufzeichnungsmedium nach Anspruch 1, wobei der Teilbildblockkopf des Teilbilddatenblocks ferner Kanalpositionsinformation und Kanalwiedergabesteuerungsinformation aufweist, wobei die Kanalpositionsinformation zum Darstellen des Anfangspunkts und der Größe (SPBSIZE) aller jeweiliger der Teilbildkanaldaten geeignet ist, wobei die Kanalwiedergabesteuerungsinformation zum Identifizieren des Wiedergabesteuerungszustands aller jeweiliger der Teilbildkanaldaten geeignet ist.

8. Aufzeichnungsmedium nach Anspruch 1, auf dem mehr als eine Dateneinheit aufgezeichnet sind, wobei der Einheitskopf einer ersten Dateneinheit Identifikations- und Suchinformation aufweist, wobei die Identifikations- und Suchinformation aufweist:
eine Programmnummer (PRGNO), die anzeigt, zu welchem Programm die erste Dateneinheit gehört, wobei das Programm aus einem Satz von Dateneinheiten besteht;
eine Dateneinheitsnummer (DUTNO), die eine Seriennummer der ersten Dateneinheit in einer Datei darstellt, wobei die Datei aus Programmen besteht; und
Information, die eine Distanz vom Anfang des Einheitskopfes der ersten Dateneinheit bis zur zweiten Dateneinheit darstellt, die um tn Dateneinheiten voneinander beabstandet sind.

9. Aufzeichnungsmedium nach Anspruch 8, wobei die Distanz durch eine Anzahl von Sektoren dargestellt wird.

10. Aufzeichnungsmedium nach Anspruch 1, wobei der Einheitskopf Wiedegabesteuerungsinformation aufweist, die zur Wiedergabe einer vorbestimmten Dateneinheit notwendig ist, wobei die Wiedergabesteuerungsinformation ein Effektsetzflag (EF) zum Bereitstellen eines Effekts für Bilddaten und Tondaten der Dateneinheit aufweist.

11. Aufzeichnungsmedium nach Anspruch 1, wobei die Bildstromdaten des Hauptbilddatenblocks aus einer Gruppe einer vorbestimmten Anzahl von Bildern besteht, die nach dem MPEG-Standard komprimiert sind, wobei der Einheitskopf ferner die Gesamtzahl der wiederzugebenden Rahmen des Hauptbilddatenblocks und Information aufweist, die eine Wiedergabeanfangsrahmennummer eines Referenzrasters der Bilddaten darstellt.

12. Aufzeichnungsmedium nach Anspruch 1, auf dem mehr als eine Dateneinheit aufgezeichnet sind, wobei die Teilbilddatenblöcke in N Dateneinheiten angeordnet sind, wobei N irgendeine ganze Zahl ist, die größer oder gleich 1 ist, wobei der Einheitskopf ferner Information (VFRAME) aufweist, die die Gesamtanzahl der Rahmen in den N Dateneinheiten und eine Wiedergabeanfangsrahmennummer eines Referenzrasters in den Bilddaten darstellt.

13. Medium nach Anspruch 1, wobei der Hauptbildblockkopf ferner eine Identifikationsinformation (VBID) und Bildanfangsadreßinformation (VADRF*) aufweist.

14. Aufzeichnungsmedium, auf dem mindestens eine Dateneinheit aufgezeichnet ist, wobei die Dateneinheit eine Vielzahl von Typen von Datenblöcken aufweist und ferner aufweist:
einen Einheitskopf, der am Anfang einer Dateneinheit angeordnet ist und zur Freigabe der Steuerung jedes der Datenblöcke als unabhängige Daten der Dateneinheit geeignet ist; und
einen Blockkopf, der am Anfang jedes der Datenblöcke angeordnet ist und zum Steuern von Daten der Datenblöcke geeignet ist,
dadurch gekennzeichnet, daß:
die Datenblöcke aus einem Hauptbilddatenblock, einem Tondatenblock und einem Teilbilddatenblock bestehen,
wobei der Hauptbilddatenblock Hauptbildstromdaten aufweist,
der Tondatenblock Tonstromdaten aufweist und
der Teilbilddatenblock Teilbildstromdaten aufweist,
wobei die Teilbildstromdaten aus Bitabbildungsdaten bestehen; und daß
der Einheitskopf eine Adresse (SPBSADR) des Teilbilddatenblocks aufweist, wobei die Adresse (SPBSADR) eine relative Adresse ist, die ab dem Beginn der Dateneinheit gemessen wird, und geeignet ist, eine Wiedergabe des Hauptbilddatenblocks und des Teilbilddatenblocks zu synchronisieren.

15. Aufzeichnungsmedium nach Anspruch 14, wobei mindestens einer der Datenblöcke in eine Vielzahl von Datengruppen geteilt ist und
wobei der Blockkopf des Datenblocks Steuerungsinformation aufweist, die geteilte Positionen der Datengruppen der Datenblöcke darstellt.

16. Aufzeichnungsmedium nach Anspruch 14, wobei die effektive Blocklänge des Tondatenblocks und des Teilbilddatenblocks fest ist, wobei die Grenze des Tondatenblocks und des Teilbilddatenblocks im Bereich der effektiven Blocklänge variabel ist.

17. Aufzeichnungsmedium nach Anspruch 1, auf dem mehr als eine Dateneinheit aufgezeichnet sind, wobei eine Vielzahl eines Datenblocktyps jeder der Dateneinheiten einen Satz von Datenblöcken bilden, wobei Datenblöcke im gleichen Satz geeignet sind, in einer gleichen Verarbeitungszeit verarbeitet zu werden, und
wobei der Einheitskopf einer vorbestimmten Dateneinheit Information aufweist, die die Position des Datenblocks identifiziert, der zu der vorbestimmten Dateneinheit in dem Satz von Datenblöcken gehört.

18. Aufzeichnungsmedium nach Anspruch 14, wobei der Tonblockkopf des Tondatenblocks ferner Strompositionsinformation und Stromaufbauinformation aufweist, wobei die Strompositionsinformation zum Identifizieren des Anfangspunkts und der Größe (ABSIZE) der Tonstromdaten geeignet ist, wobei die Stromaufbauinformation zum Identifizieren des Aufbaus der Tonstromdaten geeignet ist.

19. Aufzeichnungsmedium nach Anspruch 18, wobei die Tonstromdaten in eine Vielzahl von Tonrahmen geteilt sind und
wobei die Stromaufbauinformation Information aufweist, die angibt, ob das Datenmuster jedes der Tonrahmen das gleiche ist oder nicht.

20. Aufzeichnungsmedium nach Anspruch 14, wobei der Teilbildblockkopf des Teilbilddatenblocks ferner Kanalpositionsinformation und Kanalwiedergabesteuerungsinformation aufweist, wobei die Kanalpositionsinformation zum Darstellen des Anfangspunkts und der Größe (SPBSIZE) aller jeweiliger der Teilbildkanaldaten geeignet ist, wobei die Kanalwiedergabesteuerungsinformation zum Identifizieren des Wiedergabesteuerungszustands aller jeweiliger der Teilbildkanaldaten geeignet ist.

21. Aufzeichnungsmedium nach Anspruch 14, auf dem mehr als eine Dateneinheit aufgezeichnet sind, wobei der Einheitskopf einer ersten Dateneinheit Identifikations- und Suchinformation aufweist, wobei die Identifikations- und Suchinformation aufweist:
eine Programmnummer (PRGNO), die anzeigt, zu welchem Programm die erste Dateneinheit gehört, wobei das Programm aus einem Satz von Dateneinheiten besteht;
eine Dateneinheitsnummer (DUTNO), die eine Seriennummer der ersten Dateneinheit in einer Datei darstellt, wobei die Datei aus Programmen besteht; und
Information, die eine Distanz vom Anfang des Einheitskopfes der ersten Dateneinheit bis zur zweiten Dateneinheit darstellt, die um in Dateneinheiten voneinander beabstandet sind.

22. Aufzeichnungsmedium nach Anspruch 21, wobei die Distanz durch eine Anzahl von Sektoren dargestellt wird.

23. Aufzeichnungsmedium nach Anspruch 14, wobei der Einheitskopf Wiedegabesteuerungsinformation aufweist, die zur Wiedergabe einer vorbestimmten Dateneinheit notwendig ist, wobei die Wiedergabesteuerungsinformation ein Effektsetzflag (EF) zum Bereitstellen eines Effekts für Bilddaten und Tondaten der Dateneinheit aufweist.

24. Aufzeichnungsmedium nach Anspruch 14, wobei die Bildstromdaten des Hauptbilddatenblocks aus einer Gruppe einer vorbestimmten Anzahl von Bildern besteht, die nach dem MPEG-Standard komprimiert sind, wobei der Einheitskopf ferner die Gesamtzahl der wiederzugebenden Rahmen des Hauptbilddatenblocks und Information aufweist, die eine Wiedergabeanfangsrahmennummer eines Referenzrasters der Bilddaten darstellt.

25. Aufzeichnungsmedium nach Anspruch 14, auf dem mehr als eine Dateneinheit aufgezeichnet sind, wobei die Teilbilddatenblöcke in N Dateneinheiten angeordnet sind, wobei N irgendeine ganze Zahl ist, die größer oder gleich 1 ist, wobei der Einheitskopf ferner Information (VFRAME) aufweist, die die Gesamtanzahl der Rahmen in den N Dateneinheiten und eine Wiedergabeanfangsrahmennummer eines Referenzrasters in den Bilddaten darstellt.

26. Medium nach Anspruch 14, wobei der Hauptbildblockkopf ferner eine Identifikationsinformation (VBID) und Bildanfangsadreßinformation (VADRF*) aufweist.

## Revendications

1. Support d'enregistrement sur lequel au moins une unité de données est enregistrée, ladite unité de données comprenant une pluralité de types de blocs de données, et comprenant en outre:
un en-tête d'unité disposé au commencement de l'unité de données et adapté pour permettre la commande de chacun des blocs de données en tant que données indépendantes de l'unité de données; et
un en-tête de bloc disposé au commencement de chacun des blocs de données et adapté pour commander des données du bloc de données,
caractérisé en ce que:
les blocs de données sont constitués par un bloc de données d'image principale, par un bloc de données de son et par un bloc de données de sous-image de telle sorte que
le bloc de données d'image principale comporte des données de train d'image principale,
le bloc de données de son comporte des données de train de son et
le bloc de données de sous-image comporte des données de train de sous-image,
lesdites données de train de sous-image étant constituées par des données de carte de bits, et en ce que:
l'en-tête d'unité comporte une adresse (ABSADR) du bloc de données de son, ladite adresse (ABSADR) étant une adresse relative mesurée depuis le commencement de l'unité de données et étant appropriée pour synchroniser la reproduction du bloc de données d'image principale et du bloc de données de son.

2. Support d'enregistrement selon la revendication 1, dans lequel au moins l'un des blocs de données est divisé selon une pluralité de groupes de données et
dans lequel l'en-tête de bloc du bloc de données comporte une information de commande qui représente des positions divisées des groupes de données des blocs de données.

3. Support d'enregistrement selon la revendication 1, dans lequel la longueur de bloc effective du bloc de données de son et du bloc de données de sous-image est fixe, la frontière du bloc de données de son et du bloc de données de sous-image étant variable dans la plage de la longueur de bloc effective.

4. Support d'enregistrement selon la revendication 1 sur lequel plus d'une unité de données sont enregistrées, dans lequel une pluralité d'un type de bloc de données de chacune desdites unités de données forme un jeu de blocs de données, des blocs de données dans le même jeu convenant pour être traités à un même instant de traitement et
dans lequel l'en-tête d'unité d'une unité de données prédéterminée comporte une information qui identifie la position du bloc de données appartenant à ladite unité de données prédéterminée dans ledit jeu de blocs de données.

5. Support d'enregistrement selon la revendication 1, dans lequel l'en-tête de bloc de son du bloc de données de son inclut en outre une information de position de train et une information de construction de train, l'information de position de train étant adaptée pour identifier le point de début et la dimension (ABSIZE) des données de train de son, l'information de construction de train étant adaptée pour identifier la construction de données de train de son.

6. Support d'enregistrement selon la revendication 5, dans lequel les données de train de son sont divisées selon une pluralité de trames de son et
dans lequel l'information de construction de train inclut une information qui représente si oui ou non le motif de données de chacune des trames de son est le même.

7. Support d'enregistrement selon la revendication 1, dans lequel l'en-tête de bloc de sous-image du bloc de données de sous-image inclut en outre une information de position de canal et une information de commande d'affichage de canal de telle sorte que l'information de position de canal soit adaptée pour représenter le point de début et la dimension (SPBSIZE) de chacune des données de canal de sous-image, l'information de commande d'affichage de canal étant adaptée pour identifier l'état de commande d'affichage de chacune des données de canal de sous-image.

8. Support d'enregistrement selon la revendication 1 sur lequel plus d'une unité de données sont enregistrées, dans lequel l'en-tête d'unité d'une première unité de données comporte une information d'identification et de recherche, l'information d'identification et de recherche comprenant:
un numéro de programme (PRGNO) qui représente à quel programme ladite première unité de données appartient, le programme étant constitué par un jeu d'unités de données;
un numéro d'unité de données (DUTNO) qui représente un numéro de série de ladite première unité de données dans un fichier, un fichier étant constitué par des programmes; et
une information qui représente une distance depuis le commencement de l'en-tête d'unité de ladite première unité de données jusqu'à une seconde unité de données qui en est espacée de ± n unités de données.

9. Support d'enregistrement selon la revendication 8, dans lequel la distance est représentée par un nombre de secteurs.

10. Support d'enregistrement selon la revendication 1, dans lequel l'en-tête d'unité comporte une information de commande de reproduction nécessaire pour reproduire une unité de données prédéterminée, l'information de commande de reproduction incluant un indicateur d'établissement d'effet (EF) pour appliquer un effet à des données d'image et à des données de son de l'unité de données.

11. Support d'enregistrement selon la revendication 1, dans lequel les données de train d'image du bloc de données d'image principale sont constituées par un groupe d'un nombre prédéterminé d'images comprimées conformément au standard MPEG, l'en-tête d'unité incluant en outre le nombre total d'images du bloc de données d'image principale qui est reproduit et une information qui représente un numéro d'image de début d'affichage d'un écran de référence des données d'image.

12. Support d'enregistrement selon la revendication 1 sur lequel plus d'une unité de données sont enregistrées, dans lequel les blocs de données de sous-image sont disposés dans N unités de données où N est un quelconque entier qui est égal ou supérieur à l'unité, l'en-tête d'unité incluant en outre une information (VFRAME) qui représente le nombre total d'images dans les N unités de données et un numéro d'image de début d'affichage d'un écran de référence dans l'unité de données d'image.

13. Support selon la revendication 1, dans lequel l'en-tête de bloc d'image principale comporte en outre une information d'identification (VBID) et une information d'adresse de début d'image (VADRF*).

14. Support d'enregistrement sur lequel au moins une unité de données est enregistrée, ladite unité de données comprenant une pluralité de types de blocs de données, et comprenant en outre:
un en-tête d'unité disposé au commencement de l'unité de données et adapté pour permettre la commande de chacun des blocs de données en tant que données indépendantes de l'unité de données; et
un en-tête de bloc disposé au commencement de chacun des blocs de données et adapté pour commander des données du bloc de données,
caractérisé en ce que:
les blocs de données sont constitués par un bloc de données d'image principale, par un bloc de données de son et par un bloc de données de sous-image de telle sorte que
le bloc de données d'image principale comporte des données de train d'image principale,
le bloc de données de son comporte des données de train de son et
le bloc de données de sous-image comporte des données de train de sous-image,
lesdites données de train de sous-image étant constituées par des données de carte de bits, et en ce que:
l'en-tête d'unité comporte une adresse (SPBSADR) du bloc de données de sous-image, ladite adresse (SPBSADR) étant une adresse relative mesurée depuis le commencement de l'unité de données et étant appropriée pour synchroniser la reproduction du bloc de données d'image principale et du bloc de données de sous-image.

15. Support d'enregistrement selon la revendication 14, dans lequel au moins l'un des blocs de données est divisé selon une pluralité de groupes de données et
dans lequel l'en-tête de bloc du bloc de données comporte une information de commande qui représente des positions divisées des groupes de données des blocs de données.

16. Support d'enregistrement selon la revendication 14, dans lequel la longueur de bloc effective du bloc de données de son et du bloc de données de sous-image est fixe, la frontière du bloc de données de son et du bloc de données de sous-image étant variable dans la plage de la longueur de bloc effective.

17. Support d'enregistrement selon la revendication 1 sur lequel plus d'une unité de données sont enregistrées, dans lequel une pluralité d'un type de bloc de données de chacune desdites unités de données forme un jeu de blocs de données, des blocs de données dans le même jeu convenant pour être traités à un même instant de traitement et
dans lequel l'en-tête d'unité d'une unité de données prédéterminée comporte une information qui identifie la position du bloc de données appartenant à ladite unité de données prédéterminée dans ledit jeu de blocs de données.

18. Support d'enregistrement selon la revendication 14, dans lequel l'en-tête de bloc de son du bloc de données de son inclut en outre une information de position de train et une information de construction de train, l'information de position de train étant adaptée pour identifier le point de début et la dimension (ABSIZE) des données de train de son, l'information de construction de train étant adaptée pour identifier la construction de données de train de son.

19. Support d'enregistrement selon la revendication 18, dans lequel les données de train de son sont divisées selon une pluralité de trames de son et
dans lequel l'information de construction de train inclut une information qui représente si oui ou non le motif de données de chacune des trames de son est le même.

20. Support d'enregistrement selon la revendication 14, dans lequel l'en-tête de bloc de sous-image du bloc de données de sous-image inclut en outre une information de position de canal et une information de commande d'affichage de canal de telle sorte que l'information de position de canal soit adaptée pour représenter le point de début et la dimension (SPBSIZE) de chacune des données de canal de sous-image, l'information de commande d'affichage de canal étant adaptée pour identifier l'état de commande d'affichage de chacune des données de canal de sous-image.

21. Support d'enregistrement selon la revendication 14 sur lequel plus d'une unité de données sont enregistrées, dans lequel l'en-tête d'unité d'une première unité de données comporte une information d'identification et de recherche, l'information d'identification et de recherche comprenant:
un numéro de programme (PRGNO) qui représente à quel programme ladite première unité de données appartient, le programme étant constitué par un jeu d'unités de données;
un numéro d'unité de données (DUTNO) qui représente un numéro de série de ladite première unité de données dans un fichier, un fichier étant constitué par des programmes; et
une information qui représente une distance depuis le commencement de l'en-tête d'unité de ladite première unité de données jusqu'à une seconde unité de données qui en est espacée de ± n unités de données.

22. Support d'enregistrement selon la revendication 21, dans lequel la distance est représentée par un nombre de secteurs.

23. Support d'enregistrement selon la revendication 14, dans lequel l'en-tête d'unité comporte une information de commande de reproduction nécessaire pour reproduire une unité de données prédéterminée, l'information de commande de reproduction incluant un indicateur d'établissement d'effet (EF) pour appliquer un effet à des données d'image et à des données de son de l'unité de données.

24. Support d'enregistrement selon la revendication 14, dans lequel les données de train d'image du bloc de données d'image principale sont constituées par un groupe d'un nombre prédéterminé d'images comprimées conformément au standard MPEG, l'en-tête d'unité incluant en outre le nombre total d'images du bloc de données d'image principale qui est reproduit et une information qui représente un numéro d'image de début d'affichage d'un écran de référence des données d'image.

25. Support d'enregistrement selon la revendication 14 sur lequel plus d'une unité de données sont enregistrées, dans lequel les blocs de données de sous-image sont disposés dans N unités de données où N est un quelconque entier qui est égal ou supérieur à l'unité, l'en-tête d'unité incluant en outre une information (VFRAME) qui représente le nombre total d'images dans les N unités de données et un numéro d'image de début d'affichage d'un écran de référence dans l'unité de données d'image.

26. Support selon la revendication 14, dans lequel l'en-tête de bloc d'image principale comporte en outre une information d'identification (VBID) et une information d'adresse de début d'image (VADRF*).
